# EUROPEAN PATENT APPLICATION

(11) **EP 3 333 961 A1**
(43) Date of publication of application: **13.06.2018**
(21) Application number: 16832894.6
(22) Date of filing: 28.07.2016
(51) Int. Cl.: H01M 10/0567, H01M 4/131, H01M 4/1391, H01M 4/505, H01M 4/525, H01M 10/052, H01M 10/0568

(54) **NONAQUEOUS ELECTROLYTE SOLUTION FOR LITHIUM SECONDARY BATTERIES, POSITIVE ELECTRODE FOR LITHIUM SECONDARY BATTERIES, METHOD FOR PRODUCING POSITIVE ELECTRODE FOR LITHIUM SECONDARY BATTERIES, AND LITHIUM SECONDARY BATTERY**

(30) Priority: 04.08.2015 JP 2015154414; 04.08.2015 JP 2015154415
(71) Applicant: Hitachi Chemical Company, Ltd., Chiyoda-ku Tokyo 100-6606 (JP)
(72) Inventor: HARUNA Hiroshi, Tokyo 100-8280 (JP); TAKAHASHI Shin, Tokyo 100-8280 (JP); TAKAMATSU Daiko, Tokyo 100-8280 (JP); HIRANO Tatsumi, Tokyo 100-8280 (JP)
(74) Representative: MERH-IP Matias Erny Reichl Hoffmann Patentanwälte PartG mbB
(86) International application number: PCT/JP2016/072146
(87) International publication number: WO 2017/022615

(57) **Abstract**

Provided are a non-aqueous electrolyte solution used for a lithium secondary battery etc. capable of decreasing aging deterioration of a discharge capacity, a cathode used for a lithium secondary battery, and a method for producing the same, as well as a storage device like a lithium secondary battery, etc.. To the non-aqueous electrolyte solution, added are POF₂⁻ or a salt thereof, and, PO₂F₂⁻ or a salt thereof or PO₃F²⁻ or a salt thereof. Alternatively, added is a reaction product between a boroxine compound and lithium hexafluorophosphate. In the cathode, the average oxidation number of a transition metal present in a surface layer of a composite oxide is more than 4 in Mn, more than 3 in Co and more than 2 in Ni, respectively. Further, a boron-containing compound is present on a surface of the composite oxide.

## Description

### FIELD OF INVENTION

The present invention relates to a non-aqueous electrolyte solution used for a lithium secondary battery, a cathode used for a lithium secondary battery and a method for producing the same, as well as a storage device like a lithium secondary battery or the like.

### BACKGROUND ART

A lithium secondary battery has been widely developed for practical use thereof in various fields including a power supply used for portable electronics such as a portable cell phone and a portable personal computer, a power supply used for home electric appliances, a stationary power supply used for a power storage system and an uninterruptible power supply system, and a driving power supply used for a ship, a train and a vehicle.

Traditionally, highly demanded for a lithium secondary battery are downsizing and enhancements of high output and a prolonged life of battery. Therefore, battery materials including electrodes and an electrolyte solution have been improved for the purpose of developing a lithium secondary battery having high energy density and a long durability time.

A non-aqueous electrolyte solution sealed in a lithium secondary battery has a problem especially in decomposition of a non-aqueous solvent thus caused via an oxidation-reduction reaction with electrodes. When a composition of an electrolyte solution is changed through decomposition of a non-aqueous solvent, which is a main component of the non-aqueous electrolyte solution, or decomposition products of the non-aqueous solvent are deposited on an electrode surface, battery performance is decreased by an increase in internal resistance, thereby shortening a battery life.

In this regard, a lot of technologies are proposed for the purpose of suppressing the decomposition of the non-aqueous electrolyte solution, including the technologies of coating a surface of an electrode active material, and adding various types of additives to the non-aqueous electrolyte solution.

For example, Patent Document 1 discloses a technology for suppressing self-discharge and improving a preservation property after charge operation when a lithium secondary battery is stored. Specifically, disclosed is a non-aqueous electrolyte type secondary battery provided with a cathode, an anode made of lithium or an anode material capable of intercalating/de-intercalating lithium ions, and a non-aqueous electrolyte solution containing an organic solvent and solutes.

Herein, the organic solvent includes at least one kind of additives selected from the group of lithium monofluorophosphate and lithium difluorophosphate.

Further, Patent Document 2 discloses a technology for providing a non-aqueous electrolyte solution and a non-aqueous electrolyte type secondary battery having a high capacity and excellent cycle properties. Herein, disclosed are a non-aqueous electrolyte solution containing a monofluorophosphate and/or a difluorophosphate and further an iron family element at the concentration of 1 to 2000 ppm against the entire non-aqueous electrolyte solution. The iron family element includes, for example, an iron element, a cobalt element and a nickel element.

### DOCUMENTS OF PRIOR ART

### PATENT DOCUMENTS

Patent Document 1: Japanese Patent Publication No.3439085
Patent Document 2: Japanese Unexamined Patent Application Publication No.2008-269978

### SUMMARY OF INVENTION

### PROBLEMS TO BE SOLVED BY INVENTION

According to the technology of Patent Document 1, it is described that use of a non-aqueous electrolyte solution added with one of lithium monofluorophosphate and difluorophosphate forms a good quality of coating on cathode and anode boundaries, thereby to suppress decomposition of the non-aqueous electrolyte solution.

However, although the coating is derived from such a fluorophosphate, excess formation of the coating may increase an internal resistance of battery, and decrease a discharge capacity due to uptake of ions. When addition of those lithium fluorophosphates makes the amount of lithium ions particularly depart from a proper one, this may cause a decrease in the reaction rate.

Further, according to the technology described in Patent Document 2, it is described that containing of a fluorophosphate and a specific concentration of an iron family element may keep a high capacity and particularly improve cycle properties under a high voltage condition.

However, containing of an iron element, a cobalt element or a nickel element in a non-aqueous electrolyte solution may precipitate those iron family elements at the charging time. If dendritic crystals grow on electrode surfaces so as to penetrate a separator, it is highly possible that a pair of electrodes is shortcircuited. Further, iron family elements consume the charges associated with charge/discharge operation, and repeatedly cause elution and reprecipitation. This phenomenon brings a factor causing a decrease in the discharge capacity.

In this regard, demanded is a technology capable of decreasing influence on the absolute quantity of the discharge capacity and the electrode reaction, and further suppressing the decomposition of the non-aqueous electrolyte solution. Simultaneously, further demanded is a technology for more efficiently preventing change in a composition promoted under a high temperature condition, as well as a decrease in the discharge capacity caused by deposit of decomposition products.

Accordingly, the present invention is directed to providing a non-aqueous electrolyte solution capable of decreasing aging deterioration of the discharge capacity, a cathode used for a lithium secondary battery and a method for producing the cathode, as well as a storage device such as a lithium secondary battery.

### MEANS FOR SOLVING PROBLEMS

The present inventors have keenly investigated to address the above disadvantages. As a result, the inventors have found out that an oxofluorophosphorous compound, represented by POₓF_{y} generated as a byproduct in a reaction between a boroxine compound and a lithium hexafluorophosphate, acts on a cathode surface of a lithium secondary battery, thereby favorably suppressing oxidative decomposition of a non-aqueous electrolyte solution

The above finding results in realization of a long-life lithium secondary battery. Such a lithium secondary battery is produced by containing the oxofluorophosphorous compound into the non-aqueous electrolyte solution. This procedure suppresses composition change of the non-aqueous electrolyte solution caused following charge/discharge cycles and deposit of decomposition products of non-aqueous solvents or the like, allowing prevention of deterioration of the discharge capacity.

Namely, a non-aqueous electrolyte solution of the present invention to solve the above described disadvantages is prepared by including a non-aqueous solvent and a lithium salt, and further added with POF₂⁻ or a salt thereof, and, PO₂F₂⁻ or a salt thereof or PO₃F₂⁻ or a salt thereof.

Further, a cathode used for a lithium secondary battery of the present invention is prepared by including the following composite oxide represented by Formula (3).

Li₁₊ₓMₐCO_{b}Ni_{c}Ml_{y}O₂ ----- Formula (3)

[where M1 is at least one element selected from the group of Fe, Cu, Al, Mg, Mo and Zr; 0 ≤ x ≤ 0.33, 0 ≤ a ≤ 1.0, 0 ≤ b ≤ 1.0, 0 ≤ c ≤ 1.0, 0 ≤ y ≤ 1.0 and a + b + c + y = 1]

Herein, transition metals located in a surface layer of the composite oxide have the following average oxidation numbers in a non-charge state: more than 4 in Mn, more than 3 in Co, and more than 2 in Ni. A boron-containing compound is present on a surface of the composite oxide.

Moreover, a storage device of the present invention is provided with the above described non-aqueous electrolyte solution. A lithium secondary battery of the present invention is provided with the above described non-aqueous electrolyte solution, or a cathode is the above described cathode used for the lithium secondary battery.

Furthermore, a method for producing a cathode used for a lithium secondary battery of the present invention includes the steps of: mixing particles of the composite oxide containing at least one transition metal selected from the group of Li, Mn, Co and Ni, an oxofluorophosphate compound and a solvent, thereby bringing the transition metal located in the surface layer of the composite oxide into a high oxidation state; washing and drying the particles of the composite oxide; coating a cathode current collector with a cathode mixture that contains the particles of the composite oxide; and subsequently molding the coated product.

### EFFECT OF INVENTION

According to the present invention, provided are a non-aqueous electrolyte solution capable of decreasing aging deterioration of a discharge capacity, a cathode used for a lithium secondary battery and a method for producing the cathode, and a storage device such as a lithium secondary battery.

### BRIEF DESCRIPTION OF DRAWINGS

FIG.1 is a cross-sectional view showing a structure of the lithium secondary battery in an embodiment of the present invention.
FIG.2A is a diagram showing a ¹⁹F NMR spectrum obtained by measuring a reaction product in a hydrolysis reaction of lithium hexafluorophosphate.
FIG.2B is a diagram showing a ¹⁹F NMR spectrum obtained by measuring a reaction product between a boroxine compound and lithium hexafluorophosphate.
FIG.2C is a diagram showing a ³¹P NMR spectrum obtained by measuring a reaction product in a hydrolysis reaction of lithium hexafluorophosphate.
FIG.2D is a diagram showing a ³¹P NMR spectrum obtained by measuring a reaction product between a boroxine compound and lithium hexafluorophosphate.
FIG.3 is a spectroscopic diagram showing oxidation states of manganese elements each located in a surface layer of a lithium metal composite oxide.
FIG.4 is a spectroscopic diagram showing oxidation states of cobalt elements each located in a surface layer of a lithium metal composite oxide.
FIG.5 is a spectroscopic diagram showing oxidation states of nickel elements each located in a surface layer of a lithium metal composite oxide.
FIG.6A is a spectroscopic diagram showing a result of a mass spectrum obtained by measuring around a surface of a lithium metal composite oxide in a lithium secondary battery prepared without adding any additive to a non-aqueous electrolyte solution.
FIG.6B is a spectroscopic diagram showing a result of a mass spectrum obtained by measuring around a surface of a lithium metal composite oxide in a lithium secondary battery prepared by adding vinylene carbonate to a non-aqueous electrolyte solution.
FIG.6C is a spectroscopic diagram showing a result of a mass spectrum obtained by measuring around a surface of a lithium metal composite oxide in a lithium secondary battery prepared by adding triisopropoxyboroxine to a non-aqueous electrolyte solution.
FIG.6D is a spectroscopic diagram showing a result of a mass spectrum obtained by measuring around a surface of a lithium metal composite oxide in a lithium secondary battery prepared by adding both vinylene carbonate and triisopropoxyboroxine to a non-aqueous electrolyte solution.

### EMBODIMENTS FOR CARRYING OUT INVENTION

The present inventors have keenly investigated various electrolytes. As a result, the inventors found out that a compound represented by POₓF_{y} (i.e., oxofluorophosphorous compound) can decrease deterioration of a discharge capacity of a lithium secondary battery. A compound represented by POₓF_{y} can be produced, for example, by making a boroxine compound react with lithium hexafluorophosphate. The effect of the compound represented by POₓF_{y} for decreasing the deterioration of the discharge capacity is achieved via using a non-aqueous electrolyte solution added with a compound represented by POₓF_{y}.

Further, the compound represented by POₓF_{y} exerts an effect of reforming a surface layer of the cathode active material. This effect can decrease the deterioration of the discharge capacity of the lithium secondary battery via using a cathode active material subjected to a surface treatment in advance with the compound represented by POₓF_{y}.

Hereinafter, a non-aqueous electrolyte solution used for a lithium secondary battery or the like, a cathode used for a lithium secondary battery and a method for producing the cathode, and a storage device such as a lithium secondary battery will be described in detail.

Note, the following descriptions only show specific examples for the contents of the present invention. The present invention is not limited by the following descriptions. Therefore, skilled persons in the art can variously modify and revise the present invention within the scope of the technological ideas disclosed in the present specification.

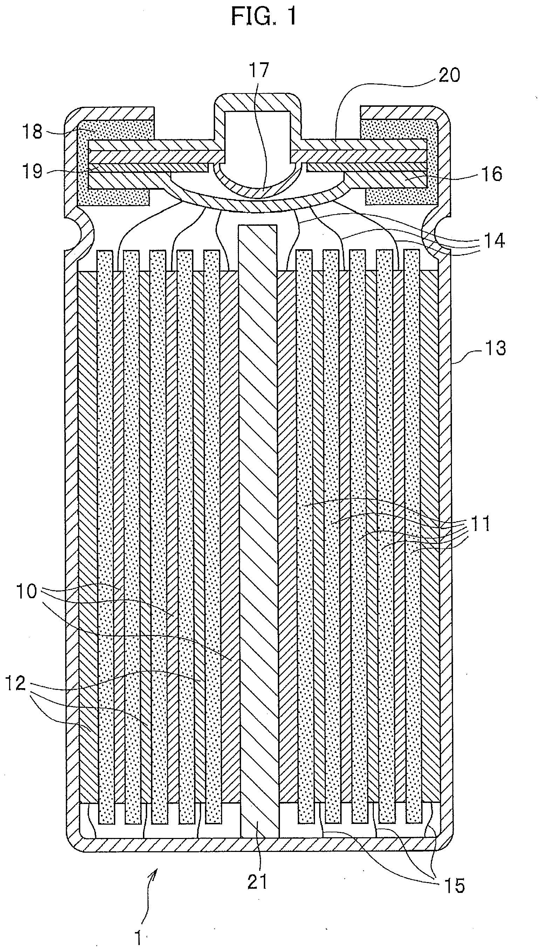

FIG.1 is a cross-sectional view schematically showing a structure of a lithium secondary battery in an embodiment of the present invention.

As shown in FIG.1, a lithium secondary battery 1 includes: a cathode 10, a separator 11, an anode 12, a battery can 13, a cathode current collection tab 14, an anode current collection tab 15, an internal lid 16, an internal pressure release valve 17, a gasket 18, a positive temperature coefficient (PCT) resistance element 19, a battery lid 20, and an axial center 21. The battery lid 20 is an integrated component comprised of an internal lid 16, an internal pressure release valve 17, a gasket 18, and a resistance element 19.

The cathode 10 and the anode 12 are provided in a sheet shape, and stacked each other with inserting the separator 11 therebetween. Here, the stack of the cathode 10, the separator 11 and the anode 12 is wound around the axis center to form a cylindrical electrode group. Note, a structure of the battery group may have various shapes as exemplified in a wound shape of approximately circular form, a stacked shape of strip formed electrodes, and a multi layered stacked shape of envelope separators each housing the electrode (i.e., anode or cathode), instead of the cylindrical shape shown in FIG.1.

The axis center 21 may be formed in any cross-sectional shape suitable for supporting the cathode 10, the separator 11 and the anode 12. Such a cross-sectional shape may include, for example, a cylindrical shape, a columnar shape, a rectangular cylindrical shape, and a polygonal shape. Further, the axis center 21 may be provided by using any material with a good insulation property. Such a material includes, for example, polypropylene and polyphenylene sulfide or the like.

Preferably, the battery can 13 may be formed of a material having an excellent corrosion resistance to a non-aqueous electrolyte solution. Further, the battery can 13 may be preferably formed of a material of which portion contacting to the non-aqueous electrolyte solution is made of a material hard to be alloyed with lithium. Specifically, such a material preferably includes aluminum, an aluminum alloy, stainless steel, and nickel plated steel or the like. Herein, stainless steel is advantageous from the viewpoints that stainless steel forms a passive film on a surface thereof thereby to have a good corrosion resistance and that the stainless steel has enough strength to resist an increase in the internal pressure thereto. Further, aluminum and an aluminum alloy are advantageous from the viewpoint that each material has a light weight so that the energy density per weight can be improved.

The battery can 12 may take suitable shapes such as a cylindrical shape, a flat long circular shape, a flat elliptical shape, a polygonal shape and a coin shape depending on the shape of the electrode group. An internal surface of the battery can 13 is subjected to a surface finishing treatment in order to improve the corrosion resistance and adhesiveness.

The cathode 10 and the anode 12 are respectively connected with a cathode current collection tab 14 and an anode current collection tab 15 used for current extraction by spot welding or ultrasonic welding or the like. Then, the electrode group provided with the cathode current collection tab 14 and the anode current collection tab 15 is housed in the battery can 13. Herein, the cathode current collection tab 14 is electrically connected to a bottom surface of the battery lid 20 and the anode current collection tab 15 is electrically connected to an internal wall of the battery can 13.

As shown in FIG.1, a plurality of the cathode current collection tabs 14 and the anode current collection tabs 15 may be arranged in the electrode group. For example, arranging the plurality of the tabs 14 and 15 may manage a large current when a lithium secondary battery 1 is applied to a driving electric power used for vehicles.

A non-aqueous electrolyte solution is injected inside the battery can 13. A method for injecting the non-aqueous electrolyte solution may have the step of directly injecting the solution in the state that the battery lid 20 is opened, or injecting the solution through an inlet port arranged at the battery lid 20 in the state that the battery lid 20 is closed. An opening of the battery can 13 is sealed by joining the battery lid 20 via welding or calking. Note, the battery lid 20 is provided with an internal pressure release valve 17 so that the valve 17 is opened when an internal pressure of the battery can 13 is excessively increased.

The cathode 10 may be formed of a typical cathode used for a lithium ion secondary battery capable of intercalating/de-intercalating lithium ions. For example, the cathode 10 is configured to include a cathode mixture layer formed of a cathode mixture made by mixing a cathode active substance, a binder and a conductive material, and a cathode current collector made by coating one side or both sides of the collector with the cathode mixture layer.

Examples of the cathode active substance include, for example, lithium cobalt oxide (LiCoO₂) and lithium nickel oxide (LiNiO₂) or the like; a layered oxide in which a part of the above transition metals are replaced by Fe, Cu, Al, Mg, Mo or the like; a spinel type oxide such as Li₁₊ₓMn₂₋ₓO₄ (where x = 0 to 0.33), Li₁₊ₓMn_{2-x-y}M_{y}O₄ (where M is at least one element selected from the group of Ni, Co, Fe, Cu, Al, Mg and Mo; x = 0 to 0.33, y = 0 to 1.0, 2-x-y > 0), Li₂Mn₃MO₈ (where M is at least one element selected from the group of Ni, Co, Fe, Cu, Al, Mg and Mo); an olivine type oxide such as LiFePO₄ and LiMnPO₄; LiMnO₄; LiMnO₂; a cupper-Li oxide (LiCuO₂); a NASICON type oxide such as Fe₂(MoO₄)₃ and Fe₂(MoO₄)₃; and an electrically conductive polymer such as a polyaniline, a polypyrrole, a polythiophene, a polyacetylene and a disulfide compound.

The cathode 10 can be produced, for example, by mixing a cathode active substance, an electrically conductive material, a binder and an appropriate solvent to prepare a cathode mixture; coating a cathode current collector with the cathode mixture, and subsequently drying and compression-molding the resulting product. A method for coating the cathode includes, for example, a doctor blade method, a dipping method, and a spraying method.

Preferably, a cathode mixture layer formed by a compression molding has a thickness of 50 □m or more and 250 □m or less depending on a type and a particle size of the cathode active substance, and performance needed for a battery. Further, a density of the cathode mixture layer may be adjusted corresponding to a type of materials to be used and performance needed for a battery. Generally, the cathode active substance is present in the cathode mixture layer in the state that secondary particles are formed via agglomeration of primary particles. Herein, a particle size of the secondary particle tends to depend on a particle size of the primary particle. Therefore, optimizing a particle size or a particle shape of the primary particles may improve the electrode density.

Appropriate materials may be used for a binder, for example, including polytetrafluoroethylene, polychlorotrifluoroethylene, polypropylene, polyethylene, acrylic polymer or their co-polymers. Further, as for an electrically conductive material, used are carbon particles such as graphite, carbon black, acetylene black, Katzchen black and channel black; and carbon fibers. A mixing rate of the electrically conductive material to the cathode active substance is preferably set to 5 mass% or more and 20 mass% or less.

As for a cathode current collector, used are a metal foil, a metal plate, an expand metal, and a punching metal or the like, all made of aluminum or stainless steel. Preferably, the cathode current collector has a thickness of 15 □m or more and 25 □m or less. The metal foil may be produced by any of a rolling process and an electrolytic process. Further, a surface of the cathode current collector may be subjected to a surface treatment for improving the oxidation resistance.

The separator 11 is arranged to prevent a short circuit from being caused via direct contact of the cathode 10 to the anode 12. As for the separator 11, used are a microporous film such as polyethylene, a polypropylene and an aramid resin, or a film prepared by coating a surface of the microporous film with a heat-resistance material like aluminum particles.

The anode 12 may be formed of a typical anode used for a lithium ion secondary battery capable of intercalating/de-intercalating lithium ions. For example, the anode 12 may be configured to include an anode active substance, a binder and an anode current collector. For example, the anode active substance forming the anode may be any one of a carbon material, a metallic material and a composite compound or the like. Herein, the anode active substance may be prepared by one of the above materials, or a combination of the two or more materials.

A carbon material forming the anode includes, for example, an artificially crystalline carbon material thus prepared by subjecting the coke or pitch derived from natural graphite, petroleum, coal or charcoal to a high-temperature treatment at about 2500°C or more; and an amorphous carbon material such as mesophase carbon, hard carbon and active carbon thus prepared by subjecting those coke and pitch to a low-temperature treatment.

Further, the carbon material may be substances made by coating a surface of the crystalline carbon with an amorphous carbon material, decreasing the crystallinity of a surface of the crystalline carbon via a mechanical treatment, or supporting a surface of the crystalline carbon with an organic polymer, boron or silicone, or carbon fibers and the like.

The metallic material forming the anode includes, for example, metallic lithium, and alloys between lithium and aluminum, tin, silicon, indium, gallium or magnesium. The metallic material may be a substance made by supporting a surface of the carbon material with a metal such as lithium, aluminum, tin, silicon, indium, gallium or magnesium, or alloys made by those metals. Further, the composite compound material forming the anode includes, for example, composite oxides made of lithium with iron, zinc, copper, cobalt, manganese, titanium or silicon and the like, or nitrides of those materials.

The anode 12 may be prepared by mixing the anode active substance and an appropriate solvent with a binder to form an anode mixture, coating the anode current collector with the anode mixture, and subsequently drying and compression-molding the resulting product. A method for coating the collector with the anode mixture includes, for example, a doctor blade process, a dipping process and a spraying process or the like.

Preferably, an anode mixture layer formed by compression-molding has a thichness of 50 □m or more and 200 □m or less depending on a type and a particle size of the anode active substance, as well as performance demanded for a battery. Further, a density of the anode active substance may be adjusted corresponding to the type to be used and the performance demanded for a battery. For example, when a typical graphite electrode is prepared, the density is preferably set to 1.3 g/cc or more and 1.8 g/cc or less. Alternatively, when the electrode is prepared by a carbon material having low crystallinity, the density is preferably set to 1.0 g/cc or more and 1.3 g/cc or less.

As for a binder, used are appropriate materials including aqueous binders such as carboxymethylcellulose and a styrene-butadiene copolymer or the like, or organic binders such as polyvinylidene fluoride (PVDF). An amount of the aqueous binder is preferably set to 0.8 mass% or more and 1.5 mass% or less per solid content of the anode mixture. Further, an amount of the organic binder is preferably set to 3 mass% or more and 6 mass% or less per solid content of the anode mixture.

As for an anode current collector, used are a metal foil, a metal plate, an expand metal, and a punching metal or the like, all made of materials such as copper or a copper alloy mainly containing copper. Preferably, the anode current collector has a thickness of 7 □m or more and 20 □m or less. The metal foil may be produced by any of a rolling process and an electrolytic process. Further, a surface of the anode current collector may be subjected to a surface treatment for improving the oxidation resistance.

A non-aqueous electrolyte solution (i.e., non-aqueous electrolyte solution used for a lithium secondary battery) sealed in a lithium secondary battery in the present embodiment has a composition including a non-aqueous solvent and a lithium salt working as a supporting electrolyte, and further including a compound represented by POₓF_{y} (i.e., oxofluorophosphorous compound). Here, it should be noted that a term of "compound" means an atomic group present in ionic forms including, for example, fluorophosphate anions and atomic groups forming a part of a compound molecule.

As for the non-aqueous solvent, used are a chain carbonate, a cyclic carbonate, a chain carboxylic acid ester, a cyclic carboxylic acid ester, a chain ether, a cyclic ether, an organic phosphorous compound and an organic sulfur compound or the like. Those compounds may be used as a non-aqueous solvent, alone or in a mixture of two or more compounds.

Preferably, the chain carbonate includes, for example, a compound having a chain alkyl group with carbon atoms of 1 or more and 5 or less. Examples of those chain carbonates include dimethyl carbonate, ethyl methyl carbonate, diethyl carbonate, methyl propyl carbonate, and ethyl propyl carbonate or the like. Further, the cyclic carbonate includes, for example, ethylene carbonate, propylene carbonate, vinylene carbonate, 1,2-butylene carbonate, and 2,3-butylene carbonate or the like.

The chain carboxylic acid ester includes, for example, methyl acetate, ethyl acetate, propyl acetate, butyl acetate, methyl propionate, ethyl propionate, and propyl propionate or the like. Further, the cyclic carboxylic acid ester includes, for example, -butyrolactone, -valerolactone, and -valerolactone or the like.

The chain ether includes, for example, dimethoxymethane, diethoxymetane, 1,2-dimethoxyethane, 1-ethoxy-2-methoxyethane, and 1,3-dimethoxypropane or the like. Further, the cyclic ether includes, for example, tetrahydrofuran, 2-methyltetrahydrofuran, and 3-methyltetrahydrofuran or the like.

The organic phosphorous compound includes, for example, phosphoric acid esters such as trimethyl phosphate, triethyl phosphate and triphenyl phosphate; phosphorous acid esters such as trimethyl phosphite, triethyl phosphite and triphenyl phosphite; and trimethylphosphine oxide or the like. Further, the organic sulfur compound includes, for example, 1,3-propane sultone, 1,4-butane sultone, methyl methanesulfonate, sulfolane, sulfolane, dimethylsulfone, ethyl methyl sulfone, methyl phenyl sulfone, and ethyl phenyl sulfone or the like.

Each of those compounds used for a non-aqueous solvent may have a substituent, or be a compound in which an oxygen atom is replaced by a sulfur atom. Such a substituent includes, for example, halogen atoms like a fluorine atom, a chlorine atom and a bromine atom. When two or more types of compounds are simultaneously used as non-aqueous solvents, especially it is preferable to combine a compound having a high specific electric conductivity and a relatively high viscosity like a chain carbonate with a compound having a relatively low viscosity like a chain carbonate. For example, when a cyclic carbonate and a chain carbonate are simultaneously used, preferably a rate of the cyclic carbonate is set to 40 volume% or less, more preferably 30 volume% or less, or further more preferably 20 volume% or less.

As for the supporting electrolyte includes, used are lithium salts including, for example, LiPF₆, LiBF₄, LiClO₄, LiAsF₆, LiCF₃SO₂, Li(CF₃SO₂)₂N, Li(C₂F₅SO₂)₂N, Li(F₂SO₂)₂N, LiF, LiCO₃, LiPF₄(CF₃)₂, LiPF₄(CF₃SO₂)₂, LiBF₃(CF₃), LiBF₂(CF₃SO₂)₂, lithium bisoxalate support, and lithium difluorooxalate support or the like. As for the support electrode, one type of those compounds may be used alone, or a mixture of two or more types of the compounds may be used.

The electrolyte solution includes ethylene carbonate or propylene carbonate together with dimethyl carbonate or ethyl methyl carbonate as non-aqueous solvents, and lithium hexafluorophosphate (LiPF₆) as a supporting electrolyte. Herein, especially a preferable electrolyte solution includes at least one member selected from the group of LiPF₆, LiBF₄, LiClO₄, LiAsF₆, LiCF₃SO₂, Li(CF₃SO₂)₂N, Li(C₂F₅SO₂)₂N and Li(F₂SO₂)₂N as a supporting electrolyte. Ethylene carbonate and propylene carbonate have an advantage that each has a high electric conductivity. Ethylene carbonate has an advantage that peeling of a graphite electrode hardly occurs more than propylene carbonate. Moreover, dimethyl carbonate and ethyl methyl carbonate have low viscosities.

On the other hand, lithium hexafluorophosphate is an especially preferable supporting electrolyte due to the good solubility and ionic conductivity. Combination use of LiBF₄ that is hardly hydrolyzed by lithium hexafluorophosphate may improve a high-temperature preservation property of a battery.

A concentration of the supporting electrolyte, for example, lithium hexafluorophosphate is preferably set to the range from 0.6 mol/L to 1.8 mol/L per electrolyte solution. This is because the concentration of the supporting electrolyte at 0.6 mol/L or more easily achieves a good ionic conductivity. Further, the concentration of the supporting electrolyte at 1.8 mol/L or less keeps a ratio of the non-electrolyte solvent at a certain degree or more, resulting in a less possibility of excessively increasing the ionic conductivity.

As for the oxofluorophosphorous compounds, added are, for example, fluorophosphoric acid anions such as POF₂⁻, PO₂F₂⁻, PO₃F₂⁻; salts thereof; and organic phosphorous compounds having an atomic group represented by POF₂, PO₂F₂ and PO₃F². Each of those oxofluorophosphorous compounds includes a phosphorus atom having a relatively high electron withdrawing property.

For example, an intermediate product produced by a nucleophilic reaction of anions such as POF₂⁻, PO₂F₂⁻ and PO₃F²⁻ or the like, and an organic phosphorus compound having an atomic group represented by POF₂, PO₂F₂ and PO₃F or the like can acidically act due to the presence of those phosphorus atoms.

Meanwhile, in the lithium secondary battery, decomposition compounds of the non-aqueous solvent formed by oxidative decomposition in the cathode may bind to a crystal surface via covalent binding. Further, repeated charge/discharge cycles make the decomposition compounds grow on a surface of the cathode active substance to form a thick film, which may bring a high resistance thereto.

Oxofluorophosphorous compounds act on decomposition compounds deposited in a thick film shape, or decomposition compounds directly bonded to a crystal surface of the cathode active substance through oxygen atoms; decrease a charge transfer resistance in the non-aqueous electrolyte solution via interaction with lithium ions; and modify an oxidation state of terminal groups exposed on a crystal surface of the cathode active substance into a high oxidation state. Those effects prevent excessive deposit of the decomposition compounds of the non-aqueous solvent, thereby to bring good conductivity of lithium ions. As a result, an increase in the internal resistance, a decrease in the charge capacity over time, and a decrease in the charge capacity following the charge/discharge operation can be reduced.

A method for adding an oxofluorophosphorous compound into a non-aqueous electrolyte solution can be carried out by adding a reaction product between a boroxine compound represented by the following Formula (1):

(RO)₃(BO)₃ ------ Formula (1)

[where R(s) are independently organic groups having 1 to 6 carbon atoms] and lithium hexafluorophosphate (LiPF₆) into the solution. More specifically, the reaction of the boroxine compound represented by Formula (1) with lithium hexafluorophosphate can produce a boroxine compound having a boron atom with the valence of more than 3, as well as the atomic group represented by the following Formula (2):

POₓF_{y} ----- Formula (2)

[where x is an integer of 1 or more and 3 or less; y is an integer of 1 or more and 5 or less], or a compound having the above atomic group (e.g., oxofluorophosphorous compound). Here, the oxidation number of the phosphorous atom of the oxofluorophosphorous compound thus produced is 3 or 5.

An organic group (R) of the boroxine compound includes, for example, a chain or branch alkyl group, or a cycloalkyl group each having 1 to 6 carbon atoms. Examples of those organic groups include a methyl group, an ethyl group, a n-propyl group, an isopropyl group, a n-butyl group, a sec-butyl group, an isobutyl group, a cyclohexyl group or the like. The organic group (R) may include a halogen atom such as a fluorine atom, a chlorine atom and a bromine atom; a nitrogen atom; and a sulfur atom.

Preferably, the organic group (R) of the boroxine compound is a secondary organic group having 1 to 6 carbon atoms. A primary organic group (R) unstabilizes a structure of the boroxine compound so that the use thereof via addition to the non-aqueous electrolyte solution tends to be difficult. Further, a tertiary organic group (R) makes insolubility of the boroxine compound become too high to add the boroxine compound to the non-aqueous electrolyte solution. In contrast, a secondary organic group (R) suppresses dissociation of the boroxine compound to a boric acid in the non-aqueous electrolyte solution, giving an advantage of achieving suitable solubility.

Among the boroxine compounds, preferable one is triisopropoxy boroxine: TiPBₓ, (((CH₃)₂CHO)₃(BO)₃) which has relatively good stability and solubility.

The boroxine compound represented by Formula (1) can be synthesized, for example, by a condensation reaction between B(OR)₃ and boric anhydride (B₂O₃). Further, when a substance in which three of R(s) in B(OR)₃ are all different each other to have different alkyl groups like B(OR₁)(OR₂)(OR₃) therein, when a substance in which only two of R(s) are different each other is used for the reaction, or further when the mol numbers thereof are changed for use in the reaction, boroxine compounds each having different organic groups in one molecule can be synthesized.

The reaction between the boroxine compound represented by Formula (1) and lithium hexafluorophosphate rapidly proceeds under the ambient temperature and pressure through mixing the boroxine compound and lithium hexafluorophosphate in the non-aqueous solvent. This reaction produces anions like PO₂F₂⁻, PO₃F²⁻ (i.e., corresponding to atomic groups) and organic phosphorous compounds like (RnO)POF₂ (where Rn represents an organic group).

Therefore, a method for producing a non-aqueous electrolyte solution added with the oxofluorophosphorous compound may be carried out by any of the processes of adding the boroxine compound represented by Formula (1) and lithium hexafluorophosphate respectively to the non-aqueous electrolyte solution, and adding a reaction compound having prepared in advance via making the boroxine compound represented by Formula (1) react with lithium hexafluorophosphate in the non-aqueous solvent.

When the boroxine compound represented by Formula (1) is added to the non-aqueous electrolyte solution, an adding amount of the boroxine compound per total amounts of the non-aqueous solvent and the supporting electrolyte is preferably set to 0.1 mass% or more, more preferably 0.3 mass% or more. Moreover, the adding amount thereof per total amounts of the non-aqueous solvent and the supporting electrolyte is preferably set to 2.0 mass% or less, more preferably 1.5 mass% or less.

This is because addition of the boroxine compound loses lithium hexafluorophosphate thus added as a supporting electrolyte in the reaction with the boroxine compound. This loss may deteriorate the conductivity of lithium ions. Thus, it is preferable to set the upper limit of the adding amount as mentioned above with respect to the range of a usual adding amount of lithium hexafluorophosphate.

Lithium hexafluorophosphate preferably used for a supporting electrolyte of a non-aqueous electrolyte solution is generally known to be hydrolyzed by water very slightly present in the non-aqueous electrolyte solution. The hydrolysis reaction of lithium hexafluorophosphate (LiPF₆) is represented by the following reactions.

LiPF₆ ⇔ Li⁺ + PF₆⁻ ------ Reaction (1)

LiPF₆ ⇔ LiF + PF₅ ------ Reaction (2)

PF₅ + H₂O ⇔ POF₃ + 2HF ------ Reaction (3)

POF₃ + H₂O ⇔ PO₂F₂⁻ + HF + H⁺ ------ Reaction (4)

PO₂F₂⁻ + H₂O ⇔ PO₃F²⁻ + HF + H⁺ ------ Reaction (5)

PO₃F²⁻ + H₂O ⇔ PO₄³⁻ + HF + H⁺ ------ Reaction (6)

Lithium hexafluorophosphate has an easily dissociating property as a temperature of the environment becomes high. Therefore, when a temperature of the lithium secondary battery becomes high following the charge/discharge operation, or when the lithium secondary battery is stored under a high-temperature condition, it is known that the forward directed reaction of Reaction (2) is facilitated to generate a strong Lewis acid PF₅ and strongly acidic HF, thereby causing decomposition of the non-aqueous solvent. In this hydrolysis reaction, anions like PO₂F₂⁻ and PO₃F²⁻ corresponding to the oxofluorophosphorous compounds can be produced as shown in the respective Reactions.

On the contrary, a reaction between the boroxine compound represented by Formula (1) and lithium hexafluorophosphate can produce an oxofluorophosphorous compound in an aprotic non-aqueous solvent substantially in absence of water. This is advantageous in view of preventing HF generation.

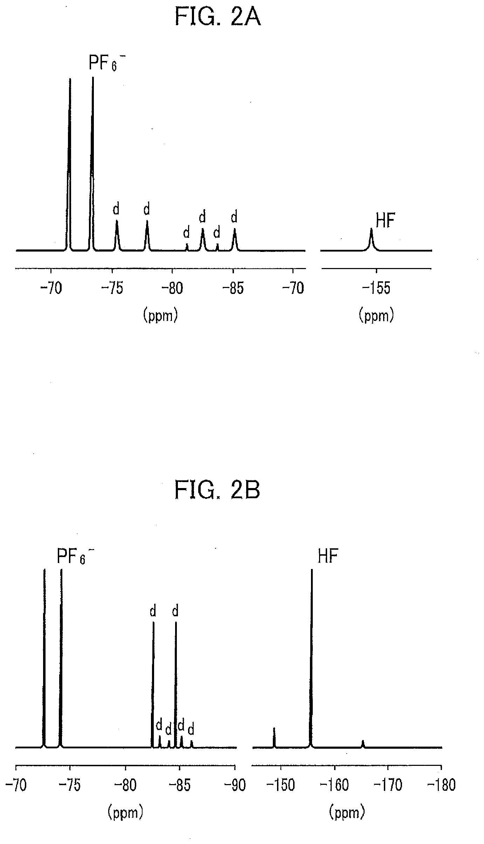

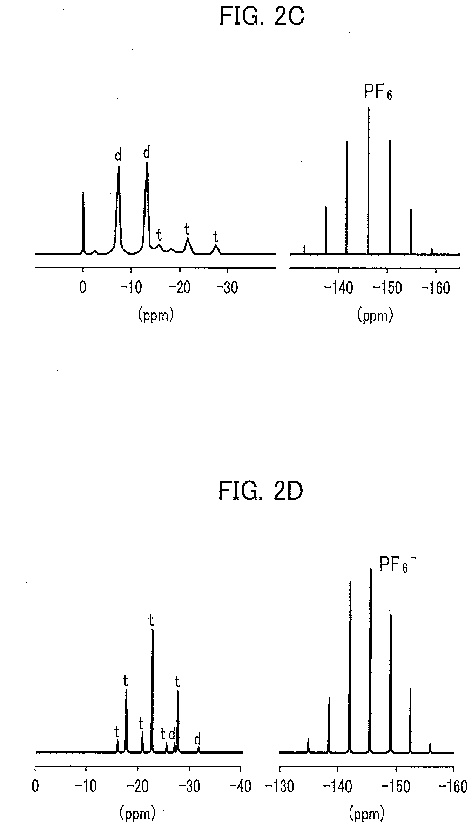

FIG.2A is a ¹⁹FNMR absorption spectrum obtained by measuring reaction products in the hydrolysis reaction of lithium hexafluorophosphate. FIG.2B is a ¹⁹FNMR absorption spectrum obtained by measuring reaction products between the boroxine compound and lithium hexafluorophosphate. FIG.2C is a ³¹PNMR absorption spectrum obtained by measuring reaction products in the hydrolysis reaction of lithium hexafluorophosphate. FIG.2D is a ³¹PNMR absorption spectrum obtained by measuring reaction products between the boroxine compound and lithium hexafluorophosphate.

Note, the above measurements are carried out by omitting a boroxine compound having boron atoms with the valence of more than 3 thus produced as a by-product, from the reaction products between the boroxine compound and lithium hexafluorophosphate

As shown in FIG.2A, according to the ¹⁹FNMR analysis of the reaction products in the hydrolysis reaction, observed are respectively a doublet (d) assigned to PO₃F²⁻ in the field from -75 ppm to -80 ppm, a doublet (d) assigned to PO₂F₂⁻ in the field from -82 ppm to -86 ppm, and a very small doublet (d) in the field from -81 ppm to -84 ppm. Herein, the doublet (d) in the field from -70 ppm to -75 ppm is a signal derived from PF₆⁻, and a singlet (s) around -155 ppm is a signal derived from HF.

In contrast, as shown in FIG.2, although the doublet assigned to PF₆⁻ is observed in the field from - 70 ppm to -75 ppm, the doublets (d) in the field from -75 ppm to -80 ppm derived from the reaction products of the hydrolysis reaction are shifted. Here, three pairs of doublets (d) presumably assigned to three components are observed in the field from -82 ppm to -87 ppm. It should be noted that signals which are not observed for the reaction product of the hydrolysis reaction are observed around -150 ppm and around -165 ppm.

Next, as shown in FIG.2C, according to ³¹PNMR analysis of the reaction products between the boroxine compound and lithium hexafluorophosphate, observed are a doublet (d) assigned to PO₃F²⁻ in the field from -5 ppm to -14 ppm, and a triplet (t) assigned to PO₂F₂⁻ in the field from -15 ppm to -30 ppm. Here, a septet observed in the field from -130 ppm to -160 ppm is a signal derived from PF₆⁻.

On the contrary, as shown in FIG.2D, according to ³¹PNMR analysis of the reaction products between the boroxine compound and lithium hexafluorophosphate, observed are two pairs of triplets (t) presumably assigned to two components in the field from -15 ppm to -30 ppm, and a doublet (d) presumably assigned to one component in the field from -26 ppm to -33 ppm. Here, the measurement results are determined by readjusting a frequency of the signal center of lithium hexafluorophosphate used as a standard reference to -145 ppm, thereby matching the measurement results of the hydrolysis reaction to frequency band.

A ratio of the peak area calculated via combining the triplet (t) presumably assigned to two components and the doublet (d) presumably assigned to one component against the peak area of the septet assigned to PF₆⁻ is 0.16.

As shown in those measurement results, an oxofluorophosphorous compound present in the different state from the hydrolysis reaction can be obtained in the reaction between the boroxine compound and lithium hexafluorophosphate. The measurement results shown in FIGS.2B and 2D allow determination of the formation of PO₂F₂⁻ and PO₃F²⁻ via the reaction between the boroxine compound and lithium hexafluorophosphate (LiPF₆) as well as the formation of a kind of oxofluorophosphorous compound represented by POₓF₂. Regarding POₓF₂, determined is the formation of an organic phosphorous compound by the heteroatom NMR analysis, the two dimensional NMR analysis and the mass spectroscopic analysis or the like.

In the reaction between the boroxine compound represented by Formula (1) and lithium hexafluorophosphate, produced are oxofluorophosphorous compounds including the above three components as well as a boroxine compound having a boron atom with the valence of more than 3. More specifically, such a boroxine compound forms a fluoride (i.e., boroxine fluoride compound) of the boroxine compound represented by Formula (1). That boroxine fluoride compound includes a boron atom having a negative charge. Hereby, interaction between the above boron atom and a lithium ion stabilizes dissociation of the supporting electrolyte. Therefore, a method for adding the reaction products between the boroxine compound represented by Formula (1) and lithium hexafluorophosphate enables the lithium secondary battery to have a high capacity.

Further, as for a method for adding the oxofluorophosphorous compound to the non-aqueous electrolyte solution, also used is a process of independently adding a fluorophosphate anion like POF₂⁻, PO₂F₂⁻ and PO₃F²⁻, salts thereof and organic phosphorous compound having an atomic group represented by POF₂, PO₂F₂ and PO₃F. Preferably, the oxofluorophosphorous compound to be added includes especially fluorophosphate anions and the salts thereof.

The oxofluorophosphorous compound may prevent the decomposition of the electrolyte solution by adding a single compound thereto. However, a plurality of the compounds may be added thereto in combination. For example, two components among POF₂⁻ or the salts thereof, and, PO₂F₂⁻ or the salts thereof or PO₃F²⁻ or the salts thereof may be added thereto. Alternatively, three components among POF₂⁻ or the salts thereof, PO₂F₂⁻ or the salts thereof, and PO₃F²⁻ or the salts thereof may be added thereto.

When a fluorophosphate anion is added to a non-aqueous electrolyte solution, the fluorophosphate anion may be dissolved beforehand in an aprotic non-aqueous solvent, and then the resulting solution may be used. The non-aqueous solvent may be selected from the group of the above described non-aqueous solvents to be used for the non-aqueous electrolyte solution. Preferably, the fluorophosphate anion is dissolved especially in the same type of non-aqueous solvent as used for the non-aqueous electrolyte solution.

Further, when the salts of the fluorophosphate anion are added to the non-aqueous electrolyte solution, preferably used are an alkaline metal salt, an alkaline earth metal salt, and an earth metal salt. Such an alkaline metal includes, for example, lithium, sodium, potassium, and cesium or the like. Moreover, the alkaline earth metal includes magnesium, calcium, strontium, and barium or the like. Furthermore, the earth metal includes aluminum, gallium, indium, and thallium or the like.

Here, as for the salts of the fluorophosphate anions, it is preferable to add no salts of transition metals such as iron, cobalt and nickel from the viewpoint of avoiding an unnecessary electrochemical reaction followed by charge consumption and insertion thereof into an active substance. Instead, it is preferable to use a metal salt having a large valence.

When the fluorophosphate anions or the salts thereof are added to the non-aqueous electrolyte solution, the boroxine compound represented by Formula (1) may be added thereto together with the above anions and salts. Addition of the boroxine compound produces a boroxine fluoride compound through the reaction between the boroxine compound and lithium hexafluorophosphate working as a supporting electrolyte. This formation of the boroxine fluoride compound stabilizes dissociation of the supporting electrolyte, thereby to allow the lithium secondary battery to have a high capacity. Preferably, an adding amount of the boroxine compound per non-aqueous electrolyte solution is set to 0.1 mass% or more and 2.0 mass% or less, more preferably 0.3 mass% or more and 1.0 mass% or less. A preferable boroxine compound to be added to the electrolyte solution is especially triisopropoxyboroxine (TiPBₓ).

As for the non-aqueous electrolyte solution, preferably a ratio of the total mol number of an atomic group (i.e., oxofluorophosphorous compound) represented by Formula (2) against the mol number of lithium hexafluorophosphate (LiPF₆), that is, a mol number ratio (i.e., POₓF_{y}/PF₆⁻) of the oxofluorophosphorous compound (POₓF_{y}) against the hexafluorophosphate anion (PF₆⁻) is set to 0.70 or less, more preferably 0.60 or less, further more preferably 0.52 or less. Here, adjusting the total mol number of the oxofluorophosphorous compound per total mol number of the hexafluorophosphate anion in an appropriate range enables the lithium secondary battery to achieve the life-prolongation without largely deteriorating conductivity of lithium ions.

On the other hand, preferably the mol number ratio (POₓF_{y}/PF₆⁻) of the oxofluorophosphorous compound (POₓF_{y}) against the hexafluorophosphate anion (PF₆⁻) is set to 0.01 or higher, more preferably 0.05 or higher, further more preferably 0.10 or higher in view of certainly achieving the above described effect.

The non-aqueous electrolyte solution may include various types of additives, for example, a film forming agent that forms a coating film on a surface of an anode active substance, an overcharge inhibitor that prevents an overcharge of battery, a flame retardant that improves fire-resistance (i.e., self-quenching property) of the non-aqueous electrolyte solution, and further a wettability enhancer that improves wettability of batteries and separators. Note, the above additives may be used with compounds which can be used for a non-aqueous solvent or a supporting electrolyte at an appropriate adding amount of typical additives, also together with other non-aqueous solvents or other supporting electrolytes.

The film forming agent includes, for example, carboxylic acid anhydrides like vinylene carbonate, sulfur compounds like 1,3-propansulton, and boron compounds such as lithium bis(oxalato)borate (LiBOB) and trimethyl borate (TMB), each of which is also used as a solvent. Here, it is known that an SEI (solid electrolyte interphase) film is formed on a surface of the anode active substance by decomposition compounds of the non-aqueous electrolyte solution. The SEI film has an effect for suppressing decomposition of the non-aqueous electrolyte solution. However, the SEI film may cause an increase in the internal resistance when the film is excessively formed, and sometimes consume a lot of electrical charges during the film formation. Hence, addition of a film forming agent like vinylene carbonate can reform the SEI film to a stably chargeable/dischargeable film, enabling life-elongation of the battery.

The overcharge inhibitor includes, for example, biphenyl, biphenyl ether, terphenyl, methylterphenyl, dimethylterphenyl, cyclohexylbenzene, dicyclohexylbenzene, triphenylbenzene, hexaphenylbenzene or the like. Further, as for the frame retardant, usable are, for example, organic phosphorous compounds such as trimethyl phosphate and triethyl phosphate; and fluorides of the above described non-aqueous solvents like boric acid esters. Moreover, as for the wettability enhancer, usable are, for example, chain ethers like 1,2-dimethoxyethan or the like.

The above described non-aqueous electrolyte solution may be used for other storage devises in which lithium ions work as carriers, besides a lithium ion secondary battery. Here, the other storage devices include, for example, capacitors such as a lithium ion capacitor and an electric double-layered capacitor. Such capacitors are configured to include a cathode and an anode that cause dielectric polarization, and the above non-aqueous electrolyte solutions containing a lithium salt. As for the electrode material causing dielectric polarization, usable are, for example, the above described carbon materials like active carbon.

The storage device including the above non-aqueous electrolyte solution can suppress decomposition of the non-aqueous electrolyte solution. Hereby, this advantageous effect can decrease a composition change of the non-aqueous electrolyte solution thus enhanced under a high-temperature storage condition as well as deterioration of the charge capacity caused by deposits of decomposition compounds.

Hereinafter, a cathode active substance subjected to a surface treatment in advance by a compound represented by POₓF_{y} (i.e., oxofluorophosphorous compound) will be described in detail.

The cathode active substance subjected to a surface treatment in advance by the oxofluorophosphorous compound is characterized that transition metals present in the surface layer of the lithium metal composite oxide are in a highly oxidative state. More specifically, a transition metal present in the surface layer of each particle of the lithium metal composite oxide exists in the state that the average oxidation number thereof is somewhat shifted to a higher valence side than that of a transition metal present inside the particle while lithium ions are intercalated / de-intercalated. Here, the surface layer of the particle is defined by a region with a depth of 30 nm from the surface of the crystal particle.

Specifically, as for the lithium metal composite oxide, usable is a layered oxide having a layered rock salt type crystal structure, represented by the following Formula (3).

Li₁₊ₓMnₐCo_{b}Ni_{c}Ml_{y}O₂ ----- Formula (3)

[where M1 is at least one element selected from Fe, Cu, Al, Mg, Mo and Zr; 0 ≤ x ≤ 0.33, 0 ≤ a ≤ 1.0, 0 ≤ b ≤ 1.0, 0 ≤ c ≤ 1.0, 0 ≤ y ≤ 1.0 and a + b + c + y = 1]

Preferably, the layered oxide is especially a manganese layered oxide containing Mn, with a > 0 in Formula (3). Such a manganese layered oxide can increase a theoretical capacity and safety, despite of a low cost of materials. Further, it is possible to obtain a stable crystal structure by making the manganese layered oxide have a multicomponent system composition containing Co and Ni as well as Mn.

Further, as for the lithium metal composite oxide, specifically usable is a spinel type oxide having a spinel type crystal structure, represented by the following Formula (4).

Li₁₊ₓMn_{2-x-y}M2_{y}O₄ ----- Formula (4)

[where M2 is at least one element selected from the group of Ni, Co, Fe, Cu, Al, Mg, Mo and Zr; 0 ≤ x ≤ 0.33, 0 ≤ y ≤ 1.0 and 2-x-y > 0]

Such a spinel type oxide realizes a crystal structure having high safety despite of the low material cost, and further is stable even in a high voltage range.

An average oxidation number of a transition metal contained in the lithium metal composite oxide typically varies associated with charge/discharge operation of the lithium secondary battery. For example, in the entire layered oxides, Mn has a formal charge varying in the minute range around tetravalent, Co has a formal charge varying in the range from about trivalent to about tetravalent, and Ni has a formal charge varying in the range from about bivalent from about tetravalent. Further, in the entire spinel type oxides, Mn has a formal charge varying in the range from about trivalent to about tetravalent.

On the contrary, as for a transition metal present in the surface layer of the layered oxide, an average oxidation number in a non-charge state increases by the treatment with the oxofluorophosphorous compound. For example, the number of Mn increases to more than 4, the number of Co increases to more than 3, and the number of Ni increases to more than 2. Further, as for a transition metal present in the surface layer of the spinel type oxide, an average oxidation number in a non-charge state increases by the above treatment, for example, the number of Mn increases to more than 3.

Alternatively, the above phenomena may be elucidated by the effect possibly exerted by the following process where the transition metal thus contained in the lithium metal composite oxide binds to fluorine (F) having high electronegativity, thereby to decrease the charge density of the transition metal. Here, the non-charge state includes a pre-charge state where no initial charge operation is carried out for the lithium secondary battery, a completely discharged state, and a charge/discharge operated state where the SOC is less than 1%. Herein, all the states are after the lithium metal composite oxide is prepared.

Here, shifts of the average oxidation number in the above described non-charge state can be observed by carrying out X-ray photoelectron spectroscopy (XPS) for the cathode thus collected by disassembling the lithium secondary battery.

More specifically, the shifts of the average oxidation number show that other atoms derived from the treatment with the oxofluorophosphorous compound are bonded to the transition metals present in the surface layer of the lithium metal composite oxide. In other words, electrochemical activity of the lithium metal composite oxide at the surface side may be suppressed by such reform of the surface layer thereof. Then, this suppression may prevent elution of the transition metals thus contained in the lithium metal composite oxide into the non-aqueous electrolyte solution, and oxidative decomposition of the non-aqueous solvent contacted with the transition metals. Accordingly, a decrease in the charge capacity over time for the lithium secondary battery can be suppressed even in the highly charged state.

The transition metals present in the surface layer of the lithium metal composite oxide are reformed into the state where fluorine atoms are bonded to the transition metals via the treatment by the oxofluorophosphorous compound. In the state where the fluorine atoms are bonded as mentioned above, it is rear that lithium ion conduction is more strongly prevented than the state where a coating film like a metal oxide is formed on a surface of the cathode active substance. Hence, the reformed surface layer may suppress the elution of the transition metals and the decomposition of the non-aqueous electrolyte solution without markedly increasing the internal resistance of the lithium secondary battery.

As described hereinbefore, the oxofluorophosphorous compound shows acidic activity. Further, the oxofluorophosphorous compound generates hydrogen fluoride (HF) via being hydrolyzed by trace amount of water possibly present in system. This phenomenon can reform the surface layer of the lithium metal composite oxide.

The cathode is characterized that a boron-containing compound is present on a surface of the lithium metal composite oxide when the cathode is arranged in the lithium secondary battery. In the lithium metal composite oxide, a mediator of a SEM film type coating film of the boron-containing compound is suitably formed on a boundary between the film and the non-aqueous electrolyte solution via the reformation of the surface layer by the oxofluorophosphorous compound. The mediator of the boron-containing compound hardly becomes resistance for lithium ion conduction compared to the coating film of metal oxides. Therefore, the mediator of the boron-containing compound can prevent the decomposition of the non-aqueous electrolyte solution of the lithium secondary battery without largely increasing the internal resistance of the secondary battery.

The boron-containing compound can be generated on a surface of the lithium metal composite oxide by adding a boron compound in the non-aqueous electrolyte solution of the lithium secondary battery. The boron compound includes, for example, lithium borates such as lithium bisoxalate borate and lithium difluorooxalate borate; boric acid esters like trimethyl borate and boroxine compound; and boroxine compounds.

The cathode (i.e., cathode used for a lithium secondary battery) containing a lithium metal composite oxide of which surface layer is subjected to reforming by an oxofluorophosphorous compound, and on which surface a boron-containing compound mediates can be obtained by a process of treating the lithium metal composite oxide beforehand by an oxofluorophosphorous compound and a boron compound. However, besides the above process, the following processes can be used when the cathode is produced. That is, the cathode can be also obtained by a process of adding a boroxine compound and lithium hexafluorophosphate into the non-aqueous solution of the lithium secondary battery, and a process of adding an oxofluorophosphorous compound and a boron compound into the non-aqueous solution of the lithium secondary battery.

Note, a boroxine fluoride compound formed by a reaction between the boroxine compound represented by Formula (1) and lithium hexafluorophosphate can produce a mediator relevant to a boron-containing compound on a surface of the lithium metal composite oxide. Hence, this production of the mediator makes it unnecessary to add a boron compound into the non-aqueous electrolyte solution of the lithium secondary battery for the purpose of generating a boron-containing compound on a surface of the lithium metal composite oxide.

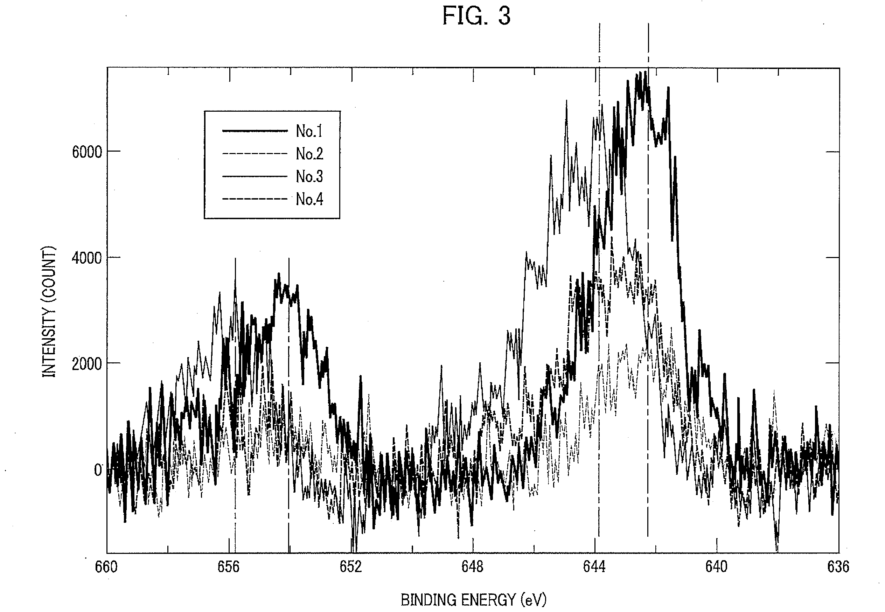

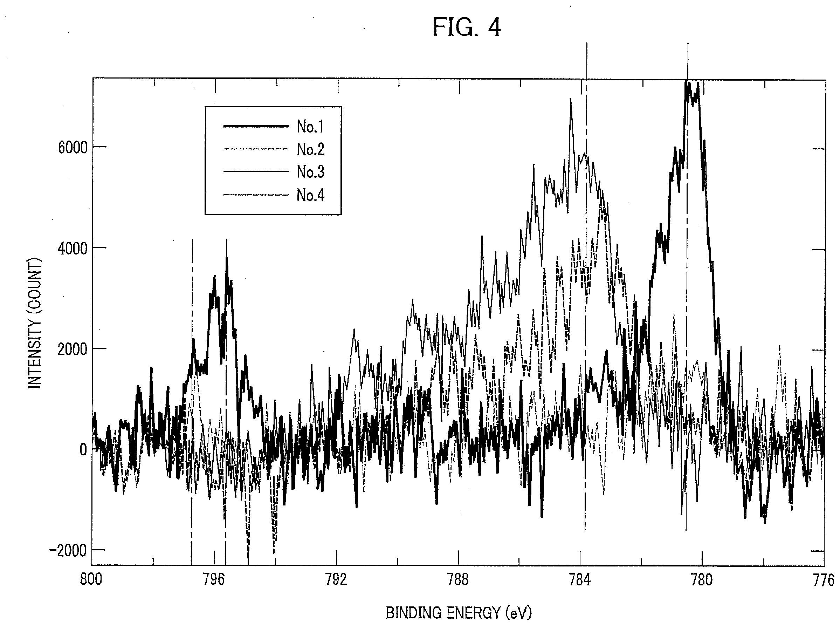

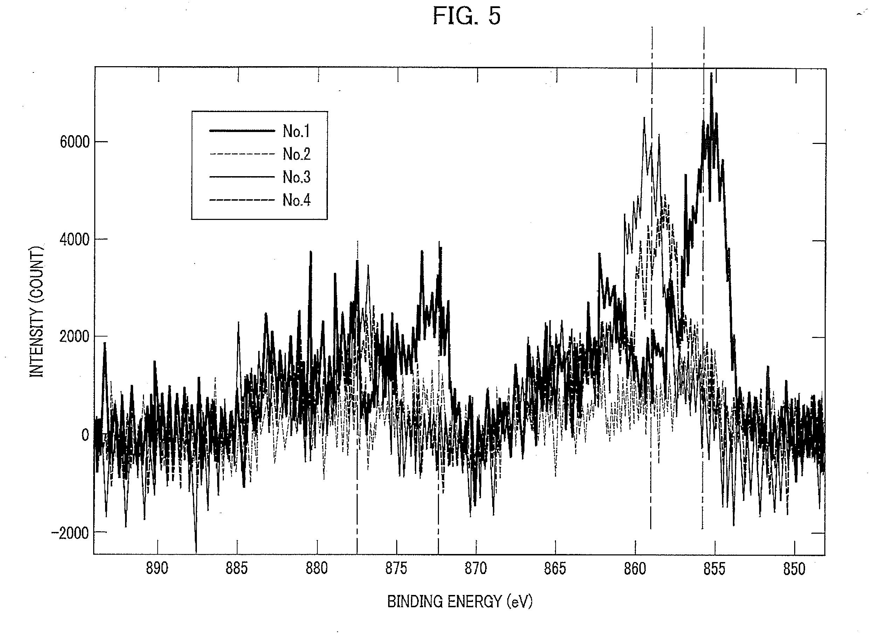

FIG.3 is a diagram showing an oxidation state of Mn present in a surface layer of the lithium metal composite oxide. Further, FIG.4 is a diagram showing an oxidation state of Co present in a surface layer of the lithium metal composite oxide. Moreover, FIG.5 is a diagram showing an oxidation state of Ni present in a surface layer of the lithium metal composite oxide.

Herein, FIGS.3, 4 and 5 show analysis results of electron states of the 2p orbital of each transition metal present in the surface layer obtained through measuring an X-ray electroscopic analysis of a lithium metal composite oxide included in the lithium secondary battery.

Specifically, the lithium secondary battery includes a ternary system layered oxide represented by LiMnCoNiO₂ as a lithium metal composite oxide (cathode active substance), a carbon material formed by coating a surface of natural graphite working as an anode active substance with amorphous carbon, a mixed solution of ethylene carbonate (EC) and ethyl methyl carbonate (EMC) as a non-aqueous electrolyte solution, and lithium hexafluorophosphate (LiPF₆) at an amount of 1.0 mol/L as a supporting electrolyte. Here, a rated capacity of the lithium secondary battery is about 1600 mAh.

The bold solid lines in FIGS.3, 4 and 5 show analyzing results (No.1) of lithium secondary batteries in a pre-charged sate thus obtained after the preparation without adding any additive into the non-aqueous electrolyte solution. Further, the fine dashed lines show analyzing results (No.2) of slightly charged lithium secondary batteries obtained after adding vinylene carbonate of 1 part by mass working as a film forming agent at the anode side into the non-aqueous electrolyte solution.

Moreover, the fine solid lines show analyzing results (No.3) of slightly charged lithium secondary batteries obtained after adding vinylene carbonate of 1 part by mass and triisopropoxy boroxine of 1 part by mass into the non-aqueous electrolyte solution. Furthermore, the bold dashed lines show analyzing results (No.4) of slightly charged lithium secondary batteries obtained after adding vinylene carbonate of 1 part by mass and triisopropoxy boroxine of 5 parts by mass into the non-aqueous electrolyte solution.

Each test in the X-ray photoelectron spectrum analysis is carried out by setting a beam width to 1 mm or less, and incident x-rays to soft x-rays of 1200 eV. Then, x-rays scattered on a surface layer (i.e., region to 30 nm deep) of the lithium metal composite oxide are selectively detected. A background of each analyzing result is subtracted by a Shirley method, and a measurement value of binding energy is corrected by the carbon (C1s) of 285 eV as a reference. Note, the lithium secondary batteries (No.2 to No.4) are charged to 6 mAh by the constant voltage of 4.2 V, and then are disassembled after charge operation. Subsequently, cathodes thus collected are measured.

As shown in FIG.3, as for manganese present in the surface layer of the lithium metal composite oxide, strong signals showing manganese with the average oxidation number of 4 are detected in the respective regions of the binding energy near 642ev and 654eV. Further, the same signals are also detected for the lithium secondary battery (No.2) thus prepared by adding vinylene carbonate.

On the contrary, in the lithium secondary batteries (Nos. 3 and 4) thus prepared by adding triisopropoxy boroxine, those signals are shifted over the regions of the binding energy near 644eV and 656eV. This shift indicates that manganese is oxidized to have the average oxidation number more than 4, or manganese is bonded to fluorine having higher electronegativity, both thereby decreasing the electron density of manganese, resulting in the shift to the high energy side.

Meanwhile, as shown in FIG.4, as for cobalt present in the surface layer of the lithium metal composite oxide, strong signals showing cobalt with the average oxidation number of 3 are detected in regions of binding energy near 780eV and near 796eV respectively. Further, the same signals are also detected for the lithium secondary battery (No.2) thus prepared by adding vinylene carbonate.

On the contrary, in the lithium secondary batteries (Nos. 3 and 4) thus prepared by adding triisopropoxy boroxine, those signals are shifted over the regions of the binding energy near 784eV and 797eV. Similarly to the manganese case, this shift indicates that cobalt is oxidized to have the average oxidation number more than 3, or cobalt is bonded to fluorine having higher electronegativity. Hereby, both phenomena decrease the electron density of cobalt, resulting in the shift to the high energy side.

Further, as shown in FIG.5, as for nickel present in the surface layer of the lithium metal composite oxide included in the lithium secondary battery (No1) in a pre-charged state, strong signals showing nickel with the average oxidation number of 2 are detected in the regions of binding energy near 856eV and near 873eV respectively. Further, the same signals are also detected for the lithium secondary battery (No.2) thus prepared by adding vinylene carbonate.

On the contrary, in the lithium secondary batteries (Nos. 3 and 4) thus prepared by adding triisopropoxy boroxine, those signals are shifted over the regions of the binding energy near 859eV and 878eV. Similarly to the manganese and cobalt cases, this shift indicates that nickel is oxidized to have the average oxidation number more than 2, or nickel is bonded to fluorine having higher electronegativity. Hereby, both phenomena decrease the electron density of nickel, resulting in the shift to the high energy side.

As shown by those results, it is understood that addition of the boroxine compound and lithium hexafluorophosphate into the non-aqueous electrolyte solution of the lithium secondary battery can shift the average oxidation number of the transition metal present in the surface layer of the lithium metal composite oxide to the higher valence side. This effect is exerted by the oxofluorophosphorous compound thus formed in a reaction between the boroxine compound and lithium hexafluorophosphate, while this effect cannot be exerted by film forming agents like vinylene carbonate.

Further, determined is that the signal intensities indicate that a thickness of decomposition compounds of the non-aqueous solvent deposited on a surface of the lithium metal composite oxide present in the lithium secondary batteries (Nos.2, 3 and 4) produced by adding triisopropoxyboroxine is smaller than that in the lithium secondary battery (No.2) produced by adding vinylene carbonate.

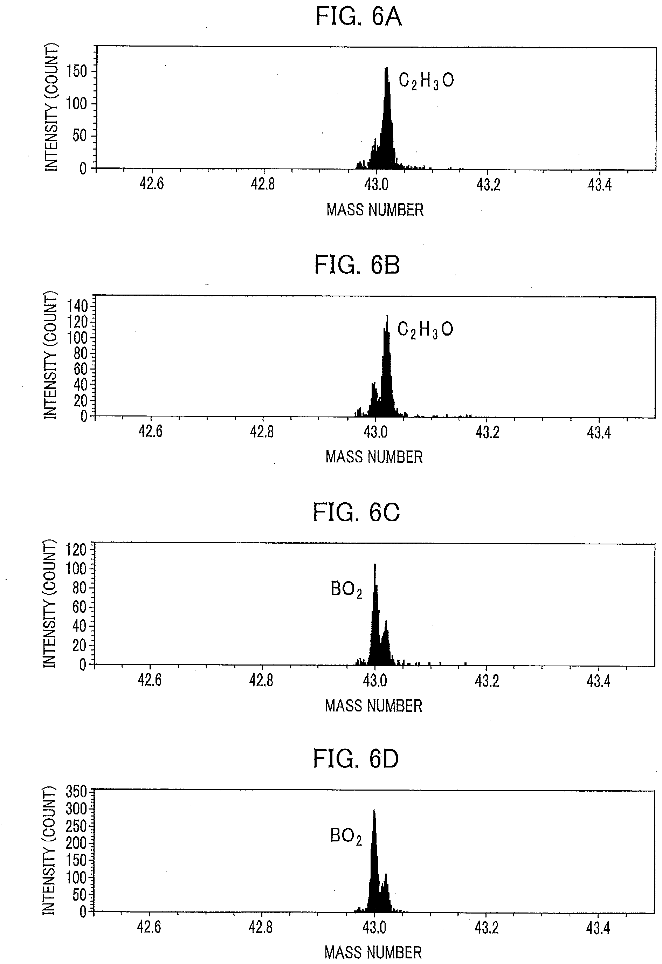

FIG.6A shows mass spectrometric results of the vicinity of a surface of the lithium metal composite oxide in the lithium secondary battery thus prepared without adding any additive to the non-aqueous electrolyte solution. FIG.6B shows mass spectrometric results of the vicinity of a surface of the lithium metal composite oxide in the lithium secondary battery thus prepared by adding vinylene carbonate into the non-aqueous electrolyte solution. FIG.6C shows mass spectrometric results of the vicinity of a surface of the lithium metal composite oxide in the lithium secondary battery thus prepared by adding triisopropoxyboroxine into the non-aqueous electrolyte solution. FIG.6D shows mass spectrometric results of the vicinity of a surface of the lithium metal composite oxide in the lithium secondary battery thus prepared by adding vinylene carbonate and triisopropoxyboroxine into the non-aqueous electrolyte solution.

FIG.6A to FIG.6D show results obtained by measuring the time of flight secondary ion mass spectrometry (TOF-SIMS) on each lithium metal composite compound included in each lithium secondary battery, and analyzing a composition of the atomic group present near the surface of each lithium metal composite oxide (i.e., cathode active substance). Note, each vertical axis of FIG.6A to 6D represents count per 0.0009 amu. Further, each lithium secondary battery includes lithium hexafluorophosphate (LiPF₆) as a supporting electrolyte, similarly to the lithium secondary batteries as mentioned hereinbefore.

As shown in FIG.6A, a strong signal of a C₂H₃O ion derived from the non-aqueous electrolyte solution is detected in the region near the mass number of about 43 with respect to a surface of the cathode of the lithium secondary battery thus prepared without adding any additive into the non-aqueous electrolyte solution. Further, as shown in FIG.6B, similarly to the above, a strong signal of a C₂H₃O ion derived from the non-aqueous electrolyte solution is detected in the region near the mass number of about 43 with respect to a surface of the cathode of the lithium secondary battery thus prepared by adding vinylene carbonate into the non-aqueous electrolyte solution.

In contrast, as shown in FIG.6C, a signal of a metaboric acid (BO₂) ion is detected with a stronger intensity than that of the C₂H₃O ion in the region near the mass number of about 43 with respect to a surface of the cathode of the lithium secondary battery thus prepared by adding triisopropoxyboroxine into the non-aqueous electrolyte solution. Further, as shown in FIG.6D similarly to the above, a signal of a metaboric acid (BO₂) ion is detected with a stronger intensity than that of the C₂H₃O ion in the region near the mass number of about 43 with respect to a surface of the cathode of the lithium secondary battery thus prepared by adding both vinylene carbonate and triisopropoxyboroxine into the non-aqueous electrolyte solution.

As shown by the above measurement results, it is understood that addition of the boroxine compound and lithium hexafluorophosphate into the non-aqueous electrolyte solution of the lithium secondary battery generates a mediator of a boron-containing compound derived from the boroxine compound. At that time, it is determined that an amount of decomposition compounds of the non-aqueous solvent deposited on a surface of the lithium metal composite oxide is relatively decreased, achieving suppression of the decomposition of the electrolyte solution.

A method for treating a lithium metal composite oxide beforehand by an oxofluorophosphorous compound at a time of cathode production is carried out by the steps of treating particles of the prepared lithium metal composite oxide by the oxofluorophosphorous compound, and using a cathode mixture containing the resultant particles to produce a cathode used for a lithium secondary battery. The method for producing the cathode used for a lithium secondary battery includes a surface layer treatment step, a washing step and an electrode molding step.

In the surface layer treating step, performed are the processes of mixing particles of a lithium metal composite oxide (i.e., composite oxide) containing at least one transition metal selected from the group of Li, Mn, Co and Ni, an oxofluorophosphorous compound and a solvent, and making the transition metals present in the surface layer of the lithium metal composite oxide (i.e., composite oxide) be in the high oxidation states.

The particles of the lithium metal composite oxide may be prepared by typical preparing methods of a cathode active substance. For example, a Li-containing compound such as lithium carbonate, lithium hydroxide, lithium acetate, lithium nitrate, lithium chloride and lithium sulfate or the like is mixed with a transition metal containing a salt/compound such as a carbonate, a hydroxide, an acetate, a nitrate, a sulfate and an oxide each other, thereby to be at a predetermined composition ratio. Then, a lithium metal composite oxide is prepared by a solid phase method, a coprecipitation method, a sol-gel method, and a hydrothermal method. After that, the resulting preparation product is appropriately cracked to form particles of the lithium metal composite oxide.

An oxofluorophosphorous compound used for treating the particles of the lithium metal composite oxide may include, for example, the above described fluorophosphate anion such as POF₂⁻, PO₂F₂⁻ and PO₃F²⁻, a salt thereof, and an organic phosphorous compound having an atomic group represented by POF₂, PO₂F₂ and PO₃F. When such a fluorophosphate anion and a salt thereof are used, lithium hexafluorophosphate is not consumed by the reaction between the boroxine compound and lithium hexafluorophosphate. This phenomenon has an advantage that it is unnecessary to separately control a concentration of the support electrolyte. From the viewpoint of no influence on the battery reaction, it is preferable to use lithium monofluorophosphate or lithium difluorophosphate for the fluorophosphate anion and the salt thereof.

Alternatively, the oxofluorophosphorous compound to be used for treating the particles of the lithium metal composite oxide may include, for example, a reaction product generated by the boroxine compound represented by the above described Formula (1) and lithium hexafluorophosphate. When such a reaction product thus generated by the boroxine compound and lithium hexafluorophosphate is used, it is possible to omit addition of the boron compound after production of the lithium secondary battery. Thus, triisopropoxyboroxine is a preferable boroxine compound due to the relatively excellent stability and solubility thereof.

Preferably, a mixed amount of the oxofluorophosphorous compound to the lithium metal composite oxide is set to 4 parts or less by mass, more preferably 3 parts or less by mass. The mixed amount of 4 parts or less by mass of the oxofluorophosphorous compound can favorably decrease aging deterioration of the discharge capacity. In contrast, preferably the mixed amount of the oxofluorophosphorous compound is set to 0.1 parts or more by mass, 0.25 parts or more by mass, more preferably 1 part or more by mass. A mixed amount of the oxofluorophosphate for reforming the lithium metal composite oxide may be set to an excess amount per surface of particles in view of the quantity and the specific surface area of the lithium metal composite oxide. Typically, the amount of 0.1 parts or more by mass thereof can significantly achieve the reform effect.

A solvent used for mixing particles of lithium metal composite oxide and the oxofluorophosphorous compound may be any of a protic non-aqueous solvent and an aprotic non-aqueous solvent. For example, an appropriate non-aqueous solvent may be used including methanol, ethanol, propanol, isopropanol, ethylene glycol, diethylene glycol, glycerin, dimethylsulfoxide, N-methyl-2-pyroridon, N,N-dimethylformamide, and N,N-dimethylacetamide. Further, as for a mixing means, for example, usable are a planetary mixer, a dispersion mixer, and a rotating and revolving mixer or the like.

The washing step is a process of washing and drying particles of the lithium metal composite oxide (i.e., composite oxide) thus having reacted with the oxofluorophosphorous compound. For example, particles of the lithium metal composite oxide are washed by a solvent the same as of the solvent used for mixing the lithium metal composite oxide and the oxofluorophosphorous compound. Thereby, it is possible to remove unreacted products or the like. After that, the solvent is removed by drying the material to produce the lithium metal composite oxide of which surface layer is reformed.

The electrode forming step is a process of coating a cathode current collector with a cathode mixture containing particles of the lithium metal composite oxide (i.e., composite oxide) thus reacted with the oxofluorophosphorous compound, and subsequently forming the cathode. The cathode mixture may be appropriately prepared by mixing particles of the lithium metal composite oxide, a binder, an electric conductor, and a suitable solvent like N-methyl-2-pyrrorydon (NMP). Further, the method for coating the collector with the cathode mixture includes, for example, a doctor blade method, a dipping method, and a spray method or the like. A cathode is produced by coating one surface side or both surface sides of the cathode current collector with the cathode mixture, drying the resultant product, and subsequently compression-molding the product to have a predetermined electrode density.

According the above described lithium secondary batteries, transition metals present in the surface layer of the lithium metal composite oxide have high oxidation states. This feature suppresses elution of the cathode active substance (i.e., lithium metal composite oxide) as well as oxidative decomposition of the non-aqueous solvent generated on a boundary between the cathode and the non-aqueous electrolyte solution. Further, a boron-containing compound mediates on a surface of the cathode active substance (i.e., lithium metal composite oxide). This phenomenon prevents the contact between the cathode and the non-aqueous electrolyte solution, allowing the generation of the oxidative decomposition of the non-aqueous solvent to be more favorably suppressed.

Moreover, the mediating boron-containing compound does not largely inhibit the conduction of lithium ions compared to the metal oxide so that few boron-containing compound is being excessively deposited associated with the charge/discharge operation as the decomposition compounds of the non-aqueous solvent are deposited.

Accordingly, it is possible to decrease the discharge capacity caused following the storage over time under the conditions of a high charge capacity depth, heated to a high temperature, or a high-temperature environment, with suppressing the internal resistance of the lithium secondary battery.

Hereinafter, the present invention will be more specifically described referring to Examples. However, the technological scope of the present invention is not limited to those Examples.

### [Example 1]

As an Example of the present invention, a lithium secondary battery in which an oxofluorophosphorous compound is added into a non-aqueous electrolyte solution was prepared. Then, the lithium secondary battery thus prepared was evaluated on high-temperature storage properties.

A cathode used for a lithium secondary battery was prepared by using a spinel type oxide represented by Li_{1.02}Mn_{1.98}Al_{0.02}O₄. A cathode active substance thus used had a mean particle size of 10 m and a specific surface area of 1.5 m²/g. As an electric conductive agent, used was a mixture prepared by mixing massive graphite particles and acetylene black at the mass rate of 9 : 2. Further, as a binder, polyvinylidene fluoride (PVDF) was used. Here, PVDF was used after having been dissolved beforehand in N-methyl-2-pyrrolydon (NMP) to have a concentration of 5 mass%. As a cathode current collector, used was aluminum foil with a thickness of 20 m.

Here, the cathode was prepared via using the following procedure. First, the cathode active substance, the electric conductive agent and PVDF were mixed at the mass rate of 85 : 10 : 5, thereby to produce a cathode mixture in a slurry form. Next, the cathode mixture thus produced was uniformly coated on the cathode current collector, and dried at 800°C. Herein, the cathode mixture was coated on both surface sides of the cathode current collector by the same procedure. Then, the cathode current collector of which both the surface sides thus coated with the cathode mixture was compression-molded, and cut off so that a coating width of the cathode mixture was 5.4 cm and a coating longitudinal length thereof was 50 cm. After that, a cathode collector tab made of aluminum foil was welded to the cathode current collector thus cut off, thereby to produce a cathode used for a lithium secondary battery.

An anode used for the lithium secondary battery was prepared by using natural graphite that worked as an anode active substance. The natural graphite thus used had a mean particle size of 20 m, a specific surface area of 5.0 m²/g and a spacing of 0.368 nm. As a binder, used are carboxymethylcellulose and a styrene-butadiene copolymer. The carboxymethylcellulose and the styrene-butadiene copolymer were used after having been dispersed in water beforehand. As an anode current collector, rolled copper foil was used.

Here, the anode was prepared via using the following procedure. First, the anode active substance, carboxymethylcellulose and the styrene-butadiene copolymer were mixed at the mass rate of 98 : 1 : 1, thereby to produce an anode mixture in a slurry form. Next, the anode current collector was uniformly coated with the anode mixture thus produced, and dried. Herein, the anode mixture was coated on both surface sides of the anode current collector by the same procedure. Then, the cathode current collector of which both the surface sides thus coated with the anode mixture was compression-molded, and cut off so that a coating width of the anode mixture was 5.6 cm and a coating longitudinal length thereof was 54 cm. After that, an anode collector tab made of copper foil was welded to the anode current collector thus cut off, thereby to produce an anode used for a lithium secondary battery.

The lithium secondary battery was shaped to be a cylindrical form as shown in FIG.1. More specifically, the cathode and the anode thus prepared were stacked by putting a separator made of polyethylene therebetween. Then, the resulting stack was spirally wound, and housed in a cylindrical battery can with a diameter of 18 mm and a length of 650 mm. Subsequently, a non-aqueous electrolyte solution was injected inside the battery can, and a battery lid was closed to produce the lithium secondary battery. Note, as the lithium secondary battery, a plurality of test batteries (i.e., test batteries 1 to 22) having different non-aqueous electrolyte solutions were produced, respectively.

Next, non-aqueous electrolyte solutions were prepared by adding oxofluorophosphorous compounds respectively having different compositions per each of the plurality of test batteries (i.e., test batteries 1 to 22), to non-aqueous solvents and supporting electrolytes. As a non-aqueous solvent, used was a mixed solution of ethylene carbonate (EC) and ethyl methyl carbonate (EMC) at the volume rate of 1 : 2. Further, as a supporting electrolyte, lithium hexafluorophosphate (LiPF₆) was used at the concentration of 1.0 mol/L. As an additive, vinylene carbonate with the amount of 1 part by mass (wt%) was added to each of the non-aqueous electrolyte solutions.

As an oxofluorophosphorous compound, used were a difluorophosphate (i.e., salt of PO₂F₂⁻ anion), a monofluorophosphate (i.e., salt of PO₃F²⁻ anion) and difluorophosphite (i.e., salt of POF₂⁻). Then, the following combinations of the compounds were added respectively to the test batteries.

### [Test Battery 1]

As for a test battery 1, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds (POₓF_{y}) to the mol number of hexafluorophosphate anion (PF₆⁻) was 0.16.

### [Test Battery 2]

As for a test battery 2, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio of the total mol number of the respective oxofluorophosphorous compounds (POₓF_{y}/PF₆⁻) to the mol number of hexafluorophosphate anion (PF₆⁻) was 0.52.

### [Test Battery 3]

As for a test battery 3, a lithium secondary battery was produced by adding a difluorophosphate (i.e., salt of PO₂F₂⁻ anion) and a monofluorophosphate (i.e., salt of PO₃F²⁻ anion) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.16.

### [Test Battery 4]

As for a test battery 4, a lithium secondary battery was produced by adding a difluorophosphate (i.e., salt of POF₂⁻ anion) and a monofluorophosphate (i.e., salt of PO₃F²⁻ anion) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.52.

### [Test Battery 5]

As for a test battery 5, a lithium secondary battery was produced by adding a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.16.

### [Test Battery 6]

As for a test battery 6, a lithium secondary battery was produced by adding a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.52.

### [Test Battery 7]

As for a test battery 7, a lithium secondary battery was produced by adding a difluorophosphate (i.e., salt of PO₂F₂⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.16.

### [Test Battery 8]

As for a test battery 8, a lithium secondary battery was produced by adding a difluorophosphate (i.e., salt of PO₂F₂⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.52.

### [Test Battery 9]

As for a test battery 9, a lithium secondary battery was produced by adding a difluorophosphate (i.e., salt of PO₂F₂⁻ anion) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.16.

### [Test Battery 10]

As for a test battery 10, a lithium secondary battery was produced by adding a difluorophosphate (i.e., salt of PO₂F₂⁻ anion) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.52.

### [Test Battery 11]

As for a test battery 11, a lithium secondary battery was produced by adding a monofluorophosphate (i.e., salt of PO₃F²⁻ anion) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.16.

### [Test Battery 12]

As for a test battery 12, a lithium secondary battery was produced by adding a monofluorophosphate (i.e., salt of PO₃F²⁻ anion) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.52.

### [Test Battery 13]

As for a test battery 13, a lithium secondary battery was produced by adding a difluorophosphite (i.e., salt of POF₂⁻) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.16.

### [Test Battery 14]

As for a test battery 14, a lithium secondary battery was produced by adding a difluorophosphite (i.e., salt of POF₂⁻) into the non-aqueous electrolyte solution so that the ratio (POₓF_{y}/PF₆⁻) of the total mol number of the respective oxofluorophosphorous compounds to the mol number of hexafluorophosphate anion (PF₆⁻) was 0.52.

### [Test Battery 15]

As for a test battery 15, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds (POₓF_{y}) to the mol number of hexafluorophosphate anion (PF₆⁻) was 0.16. Further, lithium bisoxalate borate (LiBOB) was added to the resulting non-aqueous electrolyte solution to be of 1 mass%.

### [Test Battery 16]

As for a test battery 16, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds (POₓF_{y}) to the mol number of hexafluorophosphate anion (PF₆⁻) was 0.52. Further, lithium bisoxalate borate (LiBOB) was added to the resulting non-aqueous electrolyte solution to be of 1 mass%.

### [Test Battery 17]

As for a test battery 17, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds (POₓF_{y}) to the mol number of hexafluorophosphate anion (PF₆⁻) was 0.16. Further, trimethyl borate (TMB) was added to the resulting non-aqueous electrolyte solution to be of 1 mass%.

### [Test Battery 18]

As for a test battery 18, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds (POₓF_{y}) to the mol number of hexafluorophosphate anion (PF₆⁻) was 0.52. Further, trimethyl borate (TMB) was added to the resulting non-aqueous electrolyte solution to be of 1 mass%.

### [Test Battery 19]

As for a test battery 19, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds (POₓF_{y}) to the mol number of hexafluorophosphate anion (PF₆⁻) was 0.16. Further, triisopropoxyboroxine (TiPBₓ) was added to the resulting non-aqueous electrolyte solution to be of 1 mass%.

### [Test Battery 20]

As for a test battery 20, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds (POₓF_{y}) to the mol number of hexafluorophosphate anion (PF₆⁻) was 0.52. Further, triisopropoxyboroxine (TiPBₓ) was added to the resulting non-aqueous electrolyte solution to be of 1 mass%.

### [Test Battery 21]

As for a test battery 21, a lithium secondary battery was produced by adding no oxofluorophosphorous compound to the non-aqueous electrolyte solution.

### [Test Battery 22]

As for a test battery 22, a lithium secondary battery was produced by adding a difluorophosphate (i.e., salt of PO₂F₂⁻ anion), a monofluorophosphate (i.e., salt of PO₃F²⁻ anion) and a difluorophosphite (i.e., salt of POF₂⁻) into the non-aqueous electrolyte solution so that the ratio (POₓF_{y}/PF₆⁻) of the total mol number of the respective oxofluorophosphorous compounds (POₓF_{y}) to the mol number of hexafluorophosphate anion (PF₆⁻) was 0.74.

Next, a high-temperature storage property was evaluated for each of the lithium secondary batteries thus produced as described above. The high-temperature storage property was evaluated by respectively measuring an initial discharge capacity before each battery was stored at a high temperature, and a discharge capacity after each battery was stored at the high temperature. Then, a fractional ratio (i.e., capacity maintenance rate) of the discharge capacity after the storage per initial discharge capacity was calculated.

In more detail, first the lithium secondary battery was charged with a constant current and low voltage over 5 hr at a charge current of 150 mA, and a charge voltage of 1.2 V in a thermostatic chamber kept at 25°C. Next, the lithium secondary battery was discharged with a constant current up to a final voltage of 3.0 V with a discharge current of 1500 mA. Then, under the same conditions of charge/discharge operation, the charge/discharge operations were repeatedly conducted for a total of three cycles. Here, a discharge capacity thus measured at the third cycle with a discharge current of 1500 mA was determined as an initial discharge capacity.

Then, the lithium secondary battery measured of the initial discharge capacity was stored at a high temperature. The storage conditions included a battery voltage of 4.2 V, an environmental temperature of 50°C and a storage time of 60 days. After 60 days passed, the lithium secondary battery was transferred to a thermostatic chamber kept at 25°C, and cooled by left to stand over 10 hr. Subsequently, a discharge capacity after the high-temperature storage was measured under the same charge/discharge conditions.

Table 1 shows the results of a capacity maintenance rate (%) of a discharge capacity after completing the high-temperature storage to the initial discharge capacity. Note, in Table 1, the term of "POF_{y}/PF₆⁻ "represents a mol number ratio of the oxofluorophosphorous compounds (POₓF_{y}) to the hexafluorophosphate anion (PF₆⁻), the term of "+" represents that the component is added, and the term of "-" represents that the component is not added, respectively.

**Table 1**

| | Additive to Electrolyte Solution | | | | | Capacity Maintenance Rate (%) |
|---|---|---|---|---|---|---|
| | POxFy/PF6- | PO₂F₂⁻ | PO₃F₂⁻ | POF²⁻ | Boron Compound | |
| Test Battery 1 | 0.16 | + | + | + | - | 89 |
| Test Battery 2 | 0.52 | + | + | + | - | 85 |
| Test Battery 3 | 0.16 | + | + | - | - | ⁻79 |
| Test Battery 4 | 0.52 | + | + | - | - | 78 |
| Test Battery 5 | 0.16 | - | + | + | - | 84 |
| Test Battery 6 | 0.52. | - | + | + | - | 81 |
| Test Battery 7 | 0.16 | + | - | + | - | 87 |
| Test Battery 8 | 0.52 | + | - | + | - | 84 |
| Test Battery 9 | 0.16 | + | - | - | - | 92 |
| Test Battery 10 | 0.52 | + | - | - | - | 91 |
| Test Battery 11 | 0.16 | - | + | - | - | 94 |
| Test Battery 12 | 0.52 | - | + | - | - | 87 |
| Test Battery 13 | 0.16 | - | - | + | - | 84 |
| Test Battery 14 | 0.52. | - | - | + | - | 79 |
| Test Battery 15 | 0.16 | + | + | + | LiBOB | 87 |
| Test Battery 16 | 0.52 | + | + | + | LiBOB | 86 |
| Test Battery 17 | 0.16 | + | + | + | TMB | 91 |
| Test Battery 18 | 0.52. | + | + | + | TMB | 93 |
| Test Battery 19 | 0.16 | + | + | + | TiPBx | 94 |
| Test Battery 20 | 0.52 | + | + | + | TiPBx | 92 |
| Test Battery 21 | 0 | - | - | - | - | 76 |
| Test Battery 22 | 0.74 | + | + | + | - | 68 |

As shown in Table 1, the test battery 22 in which no oxofluorophosphorous compound was added to the non aqueous electrolyte solution shows a capacity maintenance rate of 76% measured after the high-temperature storage. On the contrary, the test batteries 1 to 20 in each of which the oxofluorophosphorous compounds were added to the non-aqueous electrolyte solution show improvement of a capacity maintenance rate measured after the high-temperature storage.

The results indicate that each of various types of the oxofluorophosphorous compounds has an effect of decreasing aging deterioration of the discharge capacity. Namely, the results may demonstrate that addition of the various types of oxofluorophosphorous compounds suppresses decomposition of the non-aqueous solvent as well as an increase in the internal resistance of battery caused by deposits of the decomposition compounds of the non-aqueous solvent.

It is observed that the DC internal resistance thus measured after the high-temperature storage is decreased particularly in the frequency domain near 1 Hz for each of the test batteries 1 to 20 in each of which the oxofluorophosphorous compound were added to the non-aqueous electrolyte solution. The result suggests that the oxofluorophosphorous compound contributes to the decrease in the charge transfer resistance on the boundary at the cathode side. Further, Table 1 shows that the test battery 1 in which three types of the oxofluorophosphorous compounds were added to the non-aqueous electrolyte solution tends to have a higher capacity maintenance rate than the test batteries 3 to 8 in each of which two types of the oxofluorophosphorous compounds were added to the non-aqueous electrolyte solution. Accordingly, those results indicate that the addition of tree types of the oxofluorophosphorous compounds effectively works.

Further, the test battery 1 in which the oxofluorophosphorous compounds (POₓF_{y}) and the hexafluorophosphate anion (PF₆⁻) were added to the electrolyte solution so that a ratio (POₓF_{y}/PF₆⁻) of the total mol number of the respective oxofluorophosphorous compounds per mol number of the anion was 0.16 realizes a higher capacity maintenance rate than the test battery 2 having the ratio of 0.52. It is observed that also in other test batteries a capacity maintenance rate tends to be higher than every test battery having a small mol number ratio (POₓF_{y}/PF₆⁻).

On the contrary, the test battery 22 of having the mol number ratio of 0.74 has a smaller capacity maintenance rate than the test battery 21 in which no oxofluorophosphorous compound was added into the non-aqueous electrolyte solution. This result suggests that the mol number ratio of the oxofluorophosphorous compounds against the supporting electrolyte may have an optimal range. Thus, excessive addition of the oxofluorophosphate compounds may decrease the ion conductivity and viscosity of the non-aqueous electrolyte solution as well as the reactivity of lithium ions in the electrode reaction.

Accordingly, it is preferable to set the ratio (POₓF_{y}/PF₆⁻) of the total mol number of the respective oxofluorophosphorous compounds (POₓF_{y}) against the mole number of the hexafluorophosphate anion (PF₆⁻) to about 0.70 or less, more preferably about 0.60 or less.

Further, it is observed that the test batteries 15 to 20 in each of which the oxofluorophosphorous compounds were added together with the boroxine compounds or various types of boron compounds having a film formation activity tend to have a higher capacity maintenance rate than the test battery 1. The result suggests that the oxofluorophosphorous compounds have an effect of life-prolongation of the secondary battery, as independently and separately with respect to the boroxine compounds and the various types of boron compounds. Therefore, combination use of the oxofluorophosphorous compounds and the various types of film forming agents may further decrease the aging deterioration of the discharge capacity.

### [Example 2]

Next, as an Example of the present invention, a lithium secondary battery including a lithium metal composite oxide thus treated by an oxofluorophosphorous compound working as a cathode active substance was prepared. Then, a high-temperature storage property of the lithium secondary battery thus prepared was evaluated.

A cathode used for a lithium secondary battery was prepared the same as in Example 1 except that a cathode active substance of which surface was treated beforehand by the oxofluorophosphorous compound was used. The surface treatment with the oxofluorophosphorous compound was carried out as described below.

First, particles of the lithium metal composite oxide represented by LiMn_{0.33}Co_{0.33}Ni_{0.33}O₂, an oxofluorophosphorous compound and a solvent were mixed together, thereby allowing a surface layer of the lithium metal composite oxide to be in a high oxidation state. The lithium metal composite oxide thus used had a mean particle diameter of 10 µm, and a specific surface area of 0.8 m²/g. Methanol was used for the solvent. Further, as for the oxofluorophosphorous compound, lithium difluorophosphate (LiPO₂F₂) was used. A mixing amount of the oxofluorophosphorous compound was changed every test battery. The lithium metal composite oxide and the oxofluorophosphorous compound were made to react each other by stirring the mixture for full day and night. Then, the resulting solution thus obtained after the reaction was filtered. The resulting lithium metal composite oxide thus collected via the filtration was washed by methanol, and subsequently dried, thereby to make it a cathode active substance.

Next, an anode of the lithium secondary battery was prepared the same as in Example 1. The lithium secondary battery was made to have a cylindrical shape as shown in FIG.1. More specifically, the cathode and the anode thus prepared were stacked by putting a separator made of polyethylene therebetween, and the resulting stack was spirally wound to be housed in a cylindrical battery can having a diameter of 18 mm and a longitudinal length of 650 mm. After that, the non-aqueous electrolyte solution was injected inside the battery can, and the battery lid was tightened, thereby to produce a lithium secondary battery.

The non-aqueous electrolyte solutions were prepared by adding different amounts of additives to each of the plurality of test batteries (i.e., test batteries 23 to 36) with respect to the non-aqueous solvent and the supporting electrolyte. As for the non-aqueous solvent, used was a mixed solution thus prepared by mixing ethylene carbonate (EC) and ethyl methyl carbonate (EMC) at a volume ratio of 1 : 2. Further, as for the supporting electrolyte, used was lithium hexafluorophosphate (LiPF₆) at the concentration of 1.0 mol/L. To each of the non-aqueous electrolyte solutions, trimethyl borate or vinylene carbonate was added in the following combinations.

### [Test Battery 23]

A lithium secondary battery in which no additive was added to the non-aqueous solution was prepared by using a cathode active substance thus subjected to a surface treatment conducted by setting a mixing amount of the oxofluorophosphorous compound to 1 part by mass per lithium metal composite oxide.

### [Test Battery 24]

A lithium secondary battery was prepared the same as the test battery 23 except that a mixing amount of the oxofluorophosphorous compound was set to 3 parts by mass per lithium metal composite oxide.

### [Test Battery 25]

A lithium secondary battery was prepared the same as the test battery 23 except that a mixing amount of the oxofluorophosphorous compound was set to 0.5 parts by mass per lithium metal composite oxide.

### [Test Battery 26]

A lithium secondary battery was prepared the same as the test battery 23 except that a mixing amount of the oxofluorophosphorous compound was set to 0.25 parts by mass per lithium metal composite oxide.

### [Test Battery 27]

A lithium secondary battery was prepared the same as the test battery 23 except that vinylene carbonate was added to the non-aqueous electrolyte solution with the amount of 1 part by mass.

### [Test Battery 28]

A lithium secondary battery was prepared the same as the test battery 23 except that vinylene carbonate was added to the non-aqueous electrolyte solution with the amount of 2 parts by mass.

### [Test Battery 29]

A lithium secondary battery was prepared the same as the test battery 23 except that trimethyl borate was added to the non-aqueous electrolyte solution with the amount of 1 part by mass.

### [Test Battery 30]

A lithium secondary battery was prepared the same as the test battery 23 except that trimethyl borate was added to the non-aqueous electrolyte solution with the amount of 2 parts by mass.

### [Test Battery 31]

A lithium secondary battery was prepared the same as the test battery 23 except that trimethyl borate with the amount of 1 part by mass and vinylene carbonate with the amount of 1 part by mass were added to the non-aqueous electrolyte solution.

### [Test Battery 32]

A lithium secondary battery was prepared the same as the test battery 23 except that trimethyl borate with the amount of 1 part by mass and vinylene carbonate with the amount of 2 parts by mass were added to the non-aqueous electrolyte solution.

### [Test Battery 33]

A lithium secondary battery in which no additive was added to the non-aqueous solution was prepared by using a lithium metal composite oxide treated with no oxofluorophosphorous.

### [Test Battery 34]

A lithium secondary battery was prepared the same as the test battery 23 except that a mixing amount of the oxofluorophosphorous compound was set to 5 parts by mass.

### [Test Battery 35]

A lithium secondary battery in which vinylene carbonate with the amount of 1 part by mass was added to the non-aqueous solution was prepared by using a lithium metal composite oxide treated with no oxofluorophosphorous.

### [Test Battery 36]

A lithium secondary battery in which trimethyl borate with the amount of 1 part by mass was added to the non-aqueous solution was prepared by using a lithium metal composite oxide treated with no oxofluorophosphorous.

Next, each of the lithium secondary batteries thus prepared was evaluated for a high-temperature property. The high-temperature property was evaluated the same as in Example 1.

Table 2 shows results of a capacity maintenance rate (%) of a discharge capacity thus measured after the high-temperature storage per initial discharge capacity. Note, in Table 2, the term of "POₓF_{y}" represents a mixing amount (wt%) of the oxofluorophosphorous compound (POₓF_{y}) thus mixed with the lithium metal composite oxide when the cathode active substance was subjected to the surface treatment by the oxofluorophosphorous compound. The term of "-" represents that no compound was added.

**Table 2.**

| | POₓF_{y} (wt%) | Additive to Electrolyte Solution (wt%) | | Capacity Maintenance Rate (%) |
|---|---|---|---|---|
| | | Trimethyl Borate | Vinylene Carbonate | |
| Test Battery 23 | | - | - | 84.4 |
| Test Battery 24 | 1 | - | - | 87.1 |
| Test Battery 25 | 3 | - | - | 82.2 |
| Test Battery 26 | 0.5 | - | - | 81.6 |
| Test Battery 27 | 0.25 | - | 1 | 89.6 |
| Test Battery 28 | 1 | - | 2 | 90.6 |
| Test Battery 29 | 1 | 1 | - | 88.6 |
| Test Battery 30 | 1 | 2 | - | 84.9 |
| Test Battery 31 | 1 | 1 | 1 | 82.9 |
| Test Battery 32 | 1 | 1 | 2 | 84.3 |
| Test Battery 33 | - | - | - | 76.1 |
| Test Battery 34 | 1 | - | - | 70.6 |
| Test Battery 35 | - | - | 1 | 81.1 |
| Test Battery 36 | - | 1 | - | 80.5 |

In the test batteries 23 to 32 containing a lithium metal composite oxide thus treated by the oxofluorophosphorous compound, the average oxidation number of the transition metal contained in the lithium metal composite oxide in the non-charge state is shown as follows. Mn had the average oxidation number more than 4. Co had the average oxidation number more than 3. Ni had the average oxidation number more than 2.

On the contrary, in the test battery 33, the average oxidation number of the transition metal contained in the lithium metal composite oxide thus treated by no oxofluorophosphorous compound at the non-charge state was lower than that of the test batteries 23 to 32 in all cases of Mn, Co and Ni. As shown in Table 2, it is observed that the test batteries 23 to 32 have more improved capacity maintenance rates thus measured after the high-temperature storage than the test battery 33.

This result suggests that the application of the lithium metal composite oxide having a high oxidation state to the cathode active substance suppresses the elution of the transition metal as well as the decomposition of the non-aqueous solvent.

Further, it is observed that in each of the test batteries 23 to 32 containing a lithium metal composite oxide thus treated by the oxofluorophosphorous compound, the DC internal resistance measured after the high-temperature storage is decreased particularly in the frequency domain neat 1 Hz. This result suggests that the oxofluorophosphorous compound contributes to a decrease in the charge transfer resistance on a boundary at the cathode side.

Accordingly, it is determined that the treatment of the lithium metal composite oxide thus performed beforehand by the oxofluorophosphorous compound at the production of the cathode reforms a surface layer of the lithium metal composite oxide the same as in the case that the oxofluorophosphorous compound is added to the non-aqueous electrolyte solution.

Moreover, as shown by the test batteries 23 to 26 and 33, as the mixing amount of the oxofluorophosphorous compound per lithium metal composite oxide increases, each of the capacity maintenance rates tends to be increased. In contrast, as shown by the test battery 34, when the mixing amount of the oxofluorophosphorous compound is set to 5 parts by mass per lithium metal composite oxide, the capacity maintenance rate thereof is more decreased than that of the testy battery 33. This result suggests that a mixing amount of the oxofluorophosphorous compound may have an optimal range.

Therefore, an excess amount of the oxofluorophosphorous compound may deteriorate reactivity of lithium ions in the electrode reaction, thereby failing to obtain any lithium metal composite oxide having a high oxidation state. As a result, preferably the mixing amount of the oxofluorophosphorous compound per lithium metal composite oxide may be set to 4 parts by mass or less, more preferably 3 parts by mass or less.

Furthermore, as shown by the test batteries 27, 28 and 35, it is observed that a lithium secondary battery in which vinylene carbonate was added to the non-aqueous electrolyte solution tends to have a high capacity maintenance rate. This result indicates that reductive decomposition of the non-aqueous solvent caused at the anode side was suppressed by vinylene carbonate. Namely, decomposition of the electrolyte solution is favorably suppressed by an effect at the cathode side by the treatment with the oxofluorophosphorous compound, and an effect at the anode side by vinylene carbonate. Here, the suppressive degree observed in the test batteries 27 and 28 is larger than that of the test batteries 23 and 35, showing the exertion of a synergistic effect.

Further, as shown by the test batteries 29, 30 and 36, it is observed that a lithium secondary battery in which trimethyl borate was added to the non-aqueous electrolyte solution tends to have a high capacity maintenance rate. This result suggests that a lithium metal composite oxide thus treated with the oxofluorophosphorous compound may react with trimethyl borate, thereby to form a mediator that prevents decomposition of the non-aqueous solvent on a surface layer of the lithium metal composite oxide. Accordingly, combination usage of the oxofluorophosphorous compound, the boron compound and various types of film forming agents may decrease the aging deterioration of the discharge capacity.

### Description of Reference Numerals

- 1: Lithium Secondary Battery
- 10: Cathode
- 11: Separator
- 12: Anode
- 13: Battery Can
- 14: Cathode Current collector Tab
- 15: Anode Current collector Tab
- 16: Internal Lid
- 17: Internal Pressure Release Valve
- 18: Gasket
- 19: Positive Temperature Coefficient Resistant Element
- 20: Battery Lid
- 21: Axis Center

## Claims

1. A non-aqueous electrolyte solution, including a non-aqueous solvent and a lithium salt; and added with POF₂⁻ or a salt thereof, and, PO₂F₂⁻ or a salt thereof or PO₃F²⁻ or a salt thereof.

2. The non-aqueous electrolyte solution according to Claim 1, including a non-aqueous solvent and a lithium salt; and added with POF₂⁻ or a salt thereof, PO₂F₂⁻ or a salt thereof, and PO₃F²⁻ or a salt thereof.

3. A non-aqueous electrolyte solution, including a non-aqueous solvent and a lithium salt, and added with a reaction product between lithium hexafluorophosphate and a boroxine compound represented by the following Formula (1):
(RO)₃(BO)₃ ----- Formula (1)
[where R(s) are independently an organic group having 1 to 6 carbon atoms.].

4. The non-aqueous electrolyte solution according to Claim 3, wherein the boroxine compound is triisopropoxyboroxine.

5. The non-aqueous electrolyte solution according to Claim 3, wherein the reaction product is an atomic group represented by the following Formula (2):
POₓF_{y} ----- Formula (2)
[where x is an integer of 1 or more and 3 or less; and y is an integer of 1 or more and 5 or less.], or a compound including the atomic group.

6. The non-aqueous electrolyte solution according to Claim 5, wherein the boroxine compound is triisopropoxyboroxine.

7. The non-aqueous electrolyte solution according to Claim 5,
wherein the lithium salt includes lithium hexafluorophosphate, and
a ratio of a total mol number of an atomic group represented by Formula (2) to a mol number of the lithium salt that is lithium hexafluorophosphate is 0.7 or less.

8. A storage device provided with a non-aqueous electrolyte solution according to any one of Claims 1 to 7.

9. The storage device according to Claim 8, wherein the storage device is a lithium secondary battery.

10. A cathode used for a lithium secondary battery, including
a composite oxide represented by the following Formula (3):
Li₁₋ₓMnₐCo_{b}Ni_{c}M1_{y}O₂ ----- (3)
[where M1 is at least one element selected from the group of Fe, Cu, Al, Mg, Mo and Zr, and 0 ≤ x ≤ 0.33, 0 ≤ a ≤ 1.0, 0 ≤ b ≤ 1.0, 0 ≤ c ≤ 1.0, 0 ≤ y ≤ 1.0, and a + b + c + y = 1], wherein
a transition metal present in a surface layer of the composite oxide has the following average oxidation number in a non-charge state, more than 4 in Mn, more than 3 in Co, and more than 2 in Ni, respectively, and
a boron-containing compound is present on a surface of the composite oxide.

11. The cathode used for a lithium secondary battery according to Claim 10, wherein the transition metal present in the surface layer of the composite oxide is bonded to a fluorine atom.

12. The cathode used for a lithium secondary battery according to Claim 10, wherein the composite oxide includes Mn.

13. A lithium secondary battery, including
a cathode,
an anode, and
a non-aqueous electrolyte solution, wherein
the cathode is a cathode used for a lithium secondary battery according to any one of Claims 10 to 12.

14. The lithium secondary battery according to Claim 13, wherein a boroxine compound represented by the following Formula (1):
(RO)₃(BO)₃ ----- Formula (1)
[where R(s) are independently an organic group having 1 to 6 carbon atoms] is added to the non-aqueous electrolyte solution.

15. The lithium secondary battery according to Claim 13, wherein a boric acid ester is added to the non-aqueous electrolyte solution.

16. The lithium secondary battery according to Claim 13, wherein vinyl carbonate is added to the non-aqueous electrolyte solution.

17. A method for producing a cathode used for a lithium secondary battery comprising the steps of:
mixing particles of composite oxide containing Li and at least one transition metal selected from the group of Mn, Co and Ni; an oxofluorophosphorous compound; and a solvent, thereby to make the transition metal present in a surface layer of the composite oxide be in a high oxidation state;
washing and drying the particles of the composite oxide;
coating a cathode current collector with a cathode mixture containing the particles of the composite oxide so as to mold the collector thus coated.

18. The method for producing a cathode used for a lithium secondary battery according to Claim 17, wherein the oxofluorophosphorous compound is POF₂⁻ or a salt thereof, and, PO₂F₂⁻ or a salt thereof or PO₃F²⁻ or a salt thereof.

19. The method for producing a cathode used for a lithium secondary battery according to Claim 18, wherein the oxofluorophosphorous compound is lithium monofluorophosphate or lithium difluorophosphate.

20. The method for producing a cathode used for a lithium secondary battery according to Claim 18 or Claim 19, wherein the oxofluorophosphorous compound is a reaction product between lithium hexafluorophosphate and a boroxine compound represented by the following Formula (1):
(RO)₃(BO)₃ ----- Formula (1)
[where R(s) are independently an organic group having 1 to 6 carbon atoms].

21. The method for producing a cathode used for a lithium secondary battery according to Claim 20, wherein the boroxine compound is triisopropoxyboroxine.
